(19) Europäisches Patentamt
European Patent Office
Office européen des brevets

(11) **EP 4 369 140 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **23208998.7**

(22) Anmeldetag: **10.11.2023**

(51) Internationale Patentklassifikation (IPC):
**G05B 15/02** *(2006.01)* **G05D 23/19** *(2006.01)*

(52) Gemeinsame Patentklassifikation (CPC):
**G05D 23/1924; G05B 15/02;** G05B 2219/2614

(54) **VERFAHREN ZUR TEMPERATURPROGNOSE UND/ODER WÄRMEBEDARFSPROGNOSE EINES GEBÄUDES UND WÄRMEPUMPE**

METHOD FOR PREDICTING THE TEMPERATURE AND/OR HEAT DEMAND OF A BUILDING, AND HEAT PUMP

PROCÉDÉ DE PRÉVISION DE TEMPÉRATURE ET/OU DE PRÉVISION DE DEMANDE THERMIQUE D'UN BÂTIMENT ET POMPE À CHALEUR

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **11.11.2022 DE 102022129932**

(43) Veröffentlichungstag der Anmeldung:
**15.05.2024 Patentblatt 2024/20**

(73) Patentinhaber: **Stiebel Eltron GmbH & Co. KG 37603 Holzminden (DE)**

(72) Erfinder:
• **Knoop, Michael**
**37619 Bodenwerder (DE)**
• **Bast, Oliver**
**37603 Holzminden (DE)**
• **Franzen, Lion**
**50676 Köln (DE)**
• **Üpping, Johannes**
**32839 Steinheim (DE)**
• **Bollhöfer, Fynn**
**32108 Bad Salzuflen (DE)**

(56) Entgegenhaltungen:
DE-A1- 102017 125 282    US-A1- 2015 134 124
US-A1- 2017 206 615

## Beschreibung

Die vorliegende Erfindung betrifft ein Verfahren zur Temperaturprognose und/oder Wärmebedarfsprognose eines Gebäudes und eine zugehörige Wärmepumpe, die unter Verwendung der beschriebenen Verfahren betreibbar ist.

Wärmepumpen und andere Heizungsanlagen sind grundsätzlich bekannt. Auch bekannt ist, dass Wärmepumpen besonders umweltfreundlich arbeiten, wenn diese mit aus regenerativen Quellen stammender elektrischer Energie, beispielsweise aus Fotovoltaik, betrieben werden.

Eine Herausforderung beim Betrieb von Wärmepumpen mit regenerativem Strom ist es, den Energiebedarf des Gebäudes so vorherzusagen, dass ein möglichst großer Anteil der erneuerbaren Energie für die Heizung des Gebäudes aufgewendet werden kann, ohne dass es zu einem Komfortverlust oder ähnlichem in dem Haus kommt.

DE 10 2020 132 200 A1 beschreibt ein Verfahren zur Verbrauchssteuerung eines mit einer Fotovoltaikanlage und einem thermischen Speicher gekoppelten elektrischen Wärmeerzeugers, wobei: für einen zukünftigen Beobachtungszeitraum Wetterdaten für den Standort der Fotovoltaikanlage über das Internet bezogen werden, welche zumindest einen Ertragsprognosewert für die zu erwartende Sonneneinstrahlung enthalten und eine Steuerungseinheit die Leistung eines Wärmeerzeugers so steuert, dass die in den thermischen Speicher eingebrachte Leistung abhängig von dem übertragenen Ertragsprognosewert ist.

WO 2011/007736A2 beschreibt eine Eingabevorrichtung, die, wenn der Bedarf für mehrere Zeiträume an einem Tag in den Vorhersagedaten für die zukünftige Nachfrage vorhergesagt wird, einen Bedarf als Teil der Eingabedaten für die Bedarfsvorhersage eingibt und eine Bedarfsvorhersage-Berechnungseinheit, die den Vorhersagewert des Bedarfs in der einer Bedarfsvorhersagezeitspanne unter Verwendung von Eingabeergebnissen von der zuvor erwähnten Eingabevorrichtung berechnet. Das beschriebene Verfahren ist iterativ und erfordert einen hohen Rechenaufwand, was es nicht für alle Anwendungen geeignet macht.

US 10,025,331 beschreibt Regler für ein Temperaturmanagementsystem zum Heizen und/oder Kühlen eines Raumes nach einem Plan von Solltemperaturen über einen Regelzeitraum als Datenprozessoranordnung. Ein Signal, das die aktuelle Temperatur des Raums anzeigt, wird an einem Temperatureingang zum Empfangen eines Signals, das die aktuelle Temperatur im Raum anzeigt, und einem Steuerausgang zum Liefern von Steuersignalen an das System empfangen. Die Steuerung hat mindestens einen elektronischen Speicher zum Speichern des Plans von Solltemperaturen, einer Beziehung, basierend auf bekannten Heiz- oder Kühleigenschaften des Raums, zwischen der Energie, die dem System in einem Teil der Steuerperiode zugeführt wird, und der vorhergesagten Temperatur von den Raum während dieses Abschnitts und nachfolgender Abschnitte der Steuerperiode. Der elektronische Speicher speichert auch einen ersten Parameterwert, der die Kosten der Energieversorgung darstellt, und einen zweiten Parameterwert, der eine vorbestimmte Zulässigkeit von Abweichungen der tatsächlichen oder vorhergesagten Temperatur des Raums von dem Sollwertplan darstellt, wobei die Prozessoranordnung betreibbar ist, um für jeden Abschnitt die dem System zuzuführende Energie zu berechnen, damit mehrere Parameterwerte ein vorbestimmtes Kriterium erfüllen, wobei die mehreren Parameterwerte den ersten Parameterwert und den zweiten Parameterwert umfassen. Das beschriebene Verfahren ist kostenoptimiert ausgelegt und nicht für einen solaroptimierten Betrieb angepasst.

US 2015/006125A1 beschreibt das Erzeugen eines Wärmeübertragungsmodells für Gebäudeenergie umfassend das Entwickeln eines Modells mit partiellen Differentialgleichungen (PDE-Modell), das die Wärmeübertragung durch die Gebäudehülle eines Gebäudes beschreibt, und das Entwickeln eines Modells mit einfachen Differentialgleichungen (ODE-Modell), das die Wärmeübertragung und das Wärmegleichgewicht in einem Raum innerhalb des Gebäudes beschreibt. Die schrittweise Parameterschätzung integriert das PDE-Modell und das ODE-Modell beim Erzeugen des Wärmeübertragungsmodells. Die Verwendung von Ableitungen und Differentialgleichungen führt zu einem komplexen Modell, das nicht für alle Anwendungen geeignet ist.

US 2017/206615 A1 beschreibt Methoden und Systeme, einschließlich Computerprogrammprodukte, zur Bestimmung eines Laststeuerungsplan für Energiesteuerungsvorrichtungen unter Verwendung eines Lastverschiebungs-Optimierungsmodells und Anwendung des Laststeuerungsplans um die Energiesteuerungsvorrichtungen einzustellen. Ein Server empfängt thermodynamische Modelle, Energiepreisdaten und Energielastvorhersagedaten. Der Server generiert Preiswahrscheinlichkeitsverteilungskurven auf der Grundlage der Preisdaten und Lastwahrscheinlichkeitsverteilungskurven auf der Grundlage der Lastprognosedaten. Der Server führt ein Lastverschiebungs-Optimierungsmodell aus, um eine Gewinnwahrscheinlichkeitsverteilungskurve für Entscheidungsregeln zu bestimmen. Der Server bestimmt eine Gewinnkurve die einen optimalen Gewinnwert aufweist. Der Server erzeugt einen Laststeuerungsplan auf der Grundlage der optimalen Gewinnkurve und generiert Betriebsparameter für Energiesteuerungsgeräte unter Verwendung des Laststeuerungsplans. Der Server überträgt die Betriebsparameter an die Energiesteuerungsgeräte, um die Betriebsparameter anzupassen.

US 2015/134124 A1 beschreibt einen Regler für ein Temperaturmanagementsystem zum Heizen und/oder Kühlung eines Raumes nach einem Plan von Solltemperaturen über eine Regelperiode als Datenverarbeitungsanlage. An einem Temperatureingang wird ein Signal empfangen, das die aktuelle Temperatur des Raumes anzeigt. Ein Steuerausgang gibt Steuersignalen an das System ab. Das Steuergerät verfügt über mindestens einen elektronischen Speicher zum Speichern des Solltemperaturplans, einer Beziehung zwischen der zugeführten Energie und den bekannten Heiz- oder Kühleigenschaften des Raums, zwischen der dem System in einem Teil der Regelungsperiode zugeführten und der vorhergesagten Temperatur des Raums während dieses Abschnitts und weiterer Abschnitte der Regelungszeitraums. Der elektronische Speicher speichert auch einen ersten Parameterwert, der die Kosten der Energieversorgung repräsentiert, und einen zweiten Parameterwert, der eine vorbestimmte Akzeptanz von Abweichungen der tatsächlichen oder vorhergesagten Temperatur des Raums von dem Sollwertplan angibt, wobei die Prozessoranordnung betreibbar ist, um für jeden der Abschnitte die dem System zuzuführende Energie zu berechnen, damit eine Vielzahl von Parameterwerten ein vorbestimmten Kriteriums erfüllen, wobei die Vielzahl von Parameterwerten den ersten Parameterwert und den zweiten Parameterwert umfassen.

DE 10 2017 125282 A1 beschreibt ein Energiemanagementsystem zum vorausschauenden Ermitteln und Regeln einer Vorlauftemperatur einer Gebäudeheizung zumindest eines Gebäudes mit einem zum Anordnen in dem Gebäude vorgesehenen Steuergerat, das eine gebäudeinterne Schnittstelle, über die das Steuergerät eine Raumtemperatur zumindest eines Gebäuderaums empfangen kann und mit der Gebäudeheizung verbunden werden kann, über die das Steuergerat zum Regeln der Vorlauftemperatur eine Soll-Vorlauftemperatur der Gebäudeheizung übermitteln und eine Ist-Vorlauftemperatur von der Gebäudeheizung empfangen kann, und eine gebäudeexterne Schnittstelle aufweist, und mit einer gebäudeexternen Steuereinheit, die über die gebäudeexterne Schnittstelle mit dem Steuergerat zumindest zeitweise verbindbar ist, um Gebäudedaten vom Steuergerat empfangen und/oder Steuerdaten an das Steuergerat übermitteln zu können. Das Steuergerat und/oder die gebäudeexterne Steuereinheit weißt einen Algorithmus auf, mittels dem in Abhängigkeit zumindest von prognostizierten Wetterdaten die Soll-Vorlauftemperatur der Gebäudeheizung bestimmbar ist.

Vor diesem Hintergrund war es eine Aufgabe der vorliegenden Erfindung, ein Verfahren zur Temperaturprognose und/oder Wärmebedarfsprognose bereitzustellen, dass solaroptimiert einen Betrieb einer Wärmepumpe ermöglicht und für eine offline Anwendung auf der Wärmepumpe optimiert ist. Anders ausgedrückt, es wird nach einem besonders einfachen und zuverlässigen sowie fehlerunanfälligen Verfahren gesucht.

Erfindungsgemäß wird die Aufgabe durch ein Verfahren zur Temperaturprognose und/oder Wärmebedarfsprognose eines Gebäudes gemäß Anspruch 1 gelöst.

Die Parameter Wärmewiderstand, Wärmespeicherkapazität und solarer Wärmeeintrag ermöglichen ein Modell, das lediglich drei Parameter erfordert. Die Approximation kann über lineare Gleichungen sehr präzise erfolgen, was einen geringen Rechenaufwand erfordert. Ein Fehler wird nicht minimiert, sondern jeden Tag wird die Sache neu berechnet: Es werden zwei Parameter von gelernten Tagen verwendet und als gegeben für den aktuellen Tag angenommen. Der dritte Parameter wird abhängig von den aktuellen Messdaten ermittelt. Somit kann für eine unbekannte Größen eine gute Vorgabe erfolgen.

Für jeden Parameter wird eine Ermittlung gemacht, indem die anderen beiden Parameterwerte von den Vortagen (z.B. ein Jahr) hergenommen werden. So ergibt sich ein tagesaktueller Wert für jeden Wert.

Die drei tagesaktuellen Werte können abgespeichert werden und ein Mittelwert wird beispielsweise aus allen vorherigen Werten gebildet. Gelöscht oder gefiltert werden können Tage, die außerhalb der thermischen Parameter des Gebäudes liegen. "Abnormale" Tage können aus der Modellberechnung herausgenommen werden.

In einer bevorzugten Ausführung modelliert das thermische Modell eine Energiebilanz des Gebäudes.

In einer bevorzugten Ausführung umfasst das Verfahren weiter die folgenden Schritte: Bereitstellen einer Prognose der Außentemperatur und der Bewölkung für einen Prognosezeitraum, insbesondere Beziehen der Prognose der Außentemperatur und/oder der Bewölkung von einem Wetterdienst, Ermitteln eines Temperaturverlaufs im Gebäude und/oder eines Wärmebedarfs des Gebäudes für den Prognosezeitraum anhand des thermischen Modells.

In einer bevorzugten Ausführung wird der Temperaturverlauf im Gebäude für den Prognosezeitraum unter der Annahme ermittelt, dass keine Heizenergie eingebracht wird.

In einer bevorzugten Ausführung wird der Wärmebedarf des Gebäudes basierend auf einer bereitgestellten Solltemperatur im Gebäude ermittelt und entspricht einem Soll-Heizwärmeeintrag einer Heizungsanlage.

In einem weiteren Aspekt wird ein Verfahren zum Erstellen eines Wärmepumpenfahrplans zur Regelung einer Wärmepumpe vorgeschlagen, wobei das Verfahren den folgenden Schritt aufweist: Erstellen des Wärmepumpenfahrplans basierend auf dem nach einem der erfindungsgemäßen Verfahren ermittelten Wärmebedarf des Gebäudes.

In einer bevorzugten Ausführung umfasst die Wärmepumpe eine Fotovoltaikanlage, wobei die Erstellung des Wärmepumpenfahrplans unter Berücksichtigung der prognostizierten Bewölkung einen prognostizierten Überschuss der Fotovoltaikanlage heranzieht.

In einer bevorzugten Ausführung sieht die Erstellung des Wärmepumpenfahrplans einen Betrieb der Wärmepumpe vor, der eine Überhöhung der Temperaturen im Gebäude zu Zeiten des prognostizierten Überschusses der Fotovoltaikanlage beinhaltet.

Erfindungsgemäß werden die Modellparameter regelmäßig, insbesondere täglich, besonders bevorzugt möglichst kurz vor Ablauf eines jeweiligen betrachteten Tages, angepasst.

Erfindungsgemäß werden die Modellparameter regelmäßig, insbesondere täglich, gespeichert werden und Endwerte der Modellparameter durch Mittelung, insbesondere Medianbildung, der gespeicherten Modellparameter erhalten.

Erfindungsgemäß erfolgt die Anpassung der Modellparameter nur dann, wenn der Betrachtungszeitraum wenigstens eine Vorbedingung erfüllt.

Erfindungsgemäß weist die Vorbedingung zur Bestimmung des thermischen Widerstandes auf: Messdaten liegen vollständig für den Betrachtungszeitraum vor; Differenztemperatur zwischen Innentemperatur und Außentemperatur mindestens 10 K, und/oder Wärmemenge durch Heizung muss eingebracht worden sein.

In einer bevorzugten Ausführung enthält für die Bestimmung des Koeffizienten zur Beschreibung eines solaren Wärmeeintrags die Vorbedingung weiter einen Mindestwert der mittleren Solarstrahlung, vorzugsweise von mindestens 50 W/m$^2$.

In einer bevorzugten Ausführung werden jeweils ein mittlerer Wert der gemessenen Innentemperatur, der Außentemperatur und/oder der eingebrachten Wärmemenge bereitgestellt.

In einer bevorzugten Ausführung wird der Wert der gemessenen Innentemperatur durch Mittelung über alle Raum-Temperaturfühler des Gebäudes erhalten.

In einer bevorzugten Ausführung werden innerhalb eines Betrachtungszeitraums mehrere Werte der Innentemperatur, der Außentemperatur und/oder der Wärmemenge gemessen, insbesondere je ein Wert je Stunde, besonders bevorzugt je ein Wert alle 15 Minuten, die für den Schritt des Anpassens der Modellparameter über den Betrachtungszeitraum gemittelt werden.

In einer bevorzugten Ausführung wird der Schritt des Anpassens der Modellparameter vollständig auf einer Recheneinheit einer Wärmepumpe innerhalb des Gebäudes ausgeführt.

In einer bevorzugten Ausführung werden die drei Modellparameter des thermischen Modells persistent auf einem persistenten Speichermedium, insbesondere einer SD-Karte, gespeichert.

In einer bevorzugten Ausführung wird ein Wärmepumpenfahrplan unter Berücksichtigung des Verfahrens nach einem der vorstehenden Ausführungen eingestellt.

In einem weiteren Aspekt wird eine Wärmepumpe mit einer Steuerung vorgeschlagen, wobei die Steuerung zur Durchführung eines Verfahrens nach einem der vorstehenden Ausführungen ausgebildet ist.

Weitere bevorzugte Ausführungen und Vorteile werden auch mit Bezug auf die beigefügten Figuren beschrieben. Hierbei zeigen:

Fig. 1    schematisch und exemplarisch ein Wärmepumpensystem.
Fig. 2    schematisch und exemplarisch ein thermisches Modell.

Das Energiemanagement der vorliegenden Offenbarung findet vorzugsweise Anwendung bei leistungsregelbaren sogenannten Inverter-Wärmepumpen. Die Inverter-Wärmepumpen können eine beliebige Art von Energiequelle, beispielsweise Luft- oder Wasser/Sole, heranziehen und mit einem oder mehreren Heizungskreisen und/oder Warmwasserkreisen verbunden sein. Ebenso kann in dem Wärmepumpensystem ein Pufferspeicher zum Zwischenspeichern von erwärmtem Wasser angeordnet sein. Besonders bevorzugt ist an dem Wärmepumpensystem eine Fotovoltaik (FV)-Anlage (eine alternative Schreibweise für Fotovoltaik "FV" ist Photovoltaik "PV" bzw. PV-Anlage) anschließbar, so dass die Wärmepumpe den von der FV-Anlage nachhaltig erzeugten Strom verwenden kann.

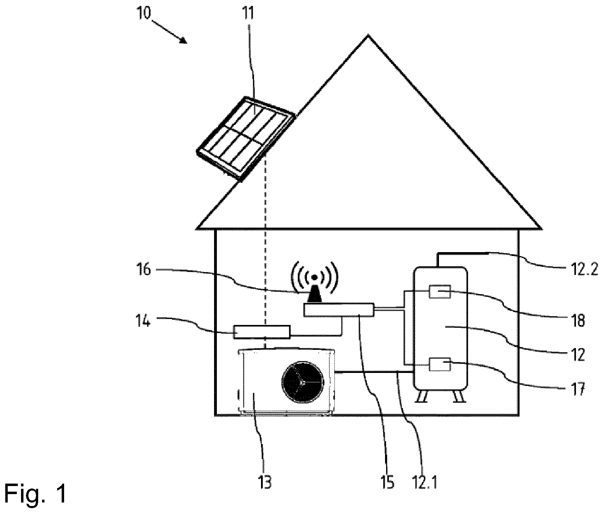

Ein solches Wärmepumpensystem 10 ist ohne darauf beschränkt zu sein schematisch und exemplarisch in Fig. 1 gezeigt. Auch andere Wärmepumpenarten sind gleichsam von der Offenbarung umfasst. Das in Fig. 1 gezeigte Wärmepumpensystem 10 zeigt eine mögliche komplexe Anlagenkonfiguration, bei welcher das Verfahren durchführbar ist.

An einem Gebäude des Wärmepumpensystems 10 ist ein Fotovoltaik-Modul 11 montiert, das über einen Wechselrichter 14 mit einem lokalen Wechselspannungsnetz verbunden ist. Im Gebäude 10 sind außerdem ein thermischer Speicher in Form eines Warmwasser-speichers 12 und ein Wärmeerzeuger in Form einer Wärmepumpe 13 installiert.

Eine für den Standort des Fotovoltaik-Moduls 11 geltende Ertragsprognose wird internetbasiert von einem Wetterdatendienst bezogen. Dazu ist eine Steuerungseinheit 15 über ein WLAN- oder GSM-Modul 16 mit dem Internet verbindbar.

In Ausführungen sind aufgrund von abweichenden Werten für Azimut und Neigung des Fotovoltaik-Moduls 11 auf dem Gebäudedach im Vergleich zu den normierten Daten der Ertragsprognose Korrekturen vorzunehmen. Der Beobachtungszeitraum wird festgelegt, beispielsweise auf 2 Tage. Der durchschnittliche Eigenbedarf an thermischer Energie wird festgelegt. Als Vorschlag wird die in einem gleich langen vergangenen Bezugszeitraum aus dem Speicher 12 abgerufene Energie zugrunde gelegt. Der Eigenbedarfswert kann vom Benutzer überschrieben werden.

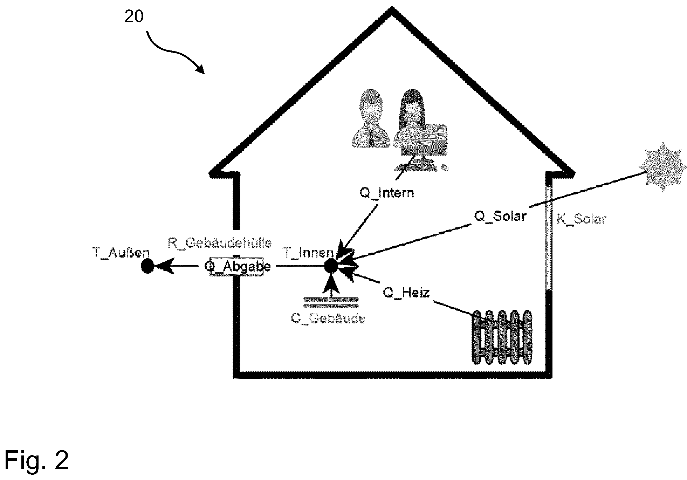

Die Steuerungseinheit 15 steuert die Leistung der Wärmepumpe 13 so, dass die in den thermischen Speicher 12 eingebrachte Leistung abhängig von der über den Internetzugang 16 übertragenen Ertragsprognose ist. Das heißt, die Wärmepumpe 13 wird vor allem dann durch die Fotovoltaik-Anlage gespeist, die aus dem Fotovoltaik-Modul 11 und dem Wechselrichter 14 besteht, wenn nach der Prognose ein Zeitintervall mit ausreichender Sonneneinstrahlung gegeben ist. Die Erfindung sieht primär keine Schaltpunkte vor, die abhängig von den tatsächlichen Echtzeit-Wetterbedingungen sind. Für die Steuerung der Wärmepumpe 13 wird insbesondere das im Weiteren ausführlich beschriebene thermische Modell 20 (vgl. Fig. 2) herangezogen. Mit diesem ist eine präzise Vorhersage des Wärme- bzw. Energiebedarfs möglich.

Von der Wärmepumpe 13 führt eine Leitung 12.1 in den Speicher 12 und eine Leitung 12.2 daraus heraus. Ein Temperatursensor 18 im Speicher 12 ist mit der Steuerungseinheit 15 verbunden, um den Beladungsgrad ermitteln zu können. Dabei handelt es sich insbesondere um eine Integralsensoreinheit mit mehreren Wärmefühlern, um trotz unterschiedlich warmer Wasserschichten im Speicher den Beladungsgrad präzise bestimmen zu können. Außerdem ist ein zusätzliches elektrisches Heizelement 17 im Speicher 12 vorgesehen.

Fig. 2 zeigt schematisch und exemplarisch ein thermisches Modell 20 und die zugehörige thermische Energiebilanz (inklusive aller betrachteten Wärmeströme), mit dem eine Prognose der Temperatur und/oder des Wärmebedarfs eines Gebäudes möglich ist. Solche Temperaturprognosen bzw. Wärmebedarfsprognosen können herangezogen werden, um den Fahrplan einer Wärmepumpe zum Heizen eines Gebäudes festzulegen.

Das erfindungsgemäße Verfahren beschreibt konzeptionell wie aus der gemessenen durchschnittlichen Innentemperatur ($T_{Innen}$), der Außentemperatur ($T_{Außen}$) und der ins Gebäude eingebrachten Wärmemenge sowie einer berechneten globalen Horizontalstrahlung und abgeschätzten internen Wärmegewinnen ein Gebäude thermisch charakterisiert werden kann. Kern der Erfindung ist, dass das Modell sehr einfach gehalten werden kann und lediglich auf den folgenden drei Größen basiert. Damit ist auch eine Berechnung auf einer Wärmepumpe selbst ohne die Anforderung hoher Rechenleistung möglich:

1.) Wärmewiderstand für den Wärmeübergang von innen nach außen ($R_{Gebäudehülle}$)
2.) Koeffizient zur Beschreibung des solaren Wärmeeintrags ($K_{Solar}$)
3.) Wärmespeicherkapazität ($C_{Gebäude}$)

Basierend auf den thermischen Kenngrößen des Gebäudes und der dargestellten Energiebilanz kann nun anhand von Außentemperaturprognosen und Bewölkungsprognosen, die von einem Wetterdienst bezogen werden, zuzüglich einer Berechnung des Sonnenstands für den prognostizierten Zeitraum abgeschätzt werden: Wie sich die Temperatur im Gebäude $T_{Innen}$ für den Prognosehorizont verändern wird, wenn keine Heizenergie eingebracht wird; Welcher Heiz-Wärmeeintrag $Q_{Heiz}$ für den Prognosehorizont benötigt wird, um eingestellte Solltemperaturen im Gebäude zu erreichen.

In Energiemanagement (EM), das beispielsweise in der Steuerung oder Regelung einer Wärmepumpe hinterlegt ist, wird die Wärmespeicherkapazität des Gebäudes und die Prognose des benötigten Heiz-Wärmeeintrages anschließend genutzt, um stündlich einen Wärmepumpenfahrplan zu generieren. Dieser versucht durch eine leichte Erhöhung der Temperatur im Gebäude den WP Betrieb in die Zeiten zu verlagern, in denen prognostizierte FV-Überschüsse erwartet werden. Eine genaue Beschreibung für die Erstellung des Wärmepumpenfahrplans und der Beeinflussung des WP-Reglers wird nachfolgend ausgeführt.

Die Besonderheiten der vorliegenden Offenbarung bzw. bevorzugter Ausführungen davon lassen sich wie folgt zusammenfassen:

- Bestimmung $T_{Innen}$ durch Mittelung über alle Raum-Temperaturfühler
- $Q_{intern}$ vereinfacht als abhängig von beheizter Wohnfläche angenommen

  ○ In einer Ausführung kann die elektrische Verbrauchsmessung am Netzanschlusspunkt ergänzend herangezogen werden, da dieser Messpunkt eh vorhanden ist.

- $Q_{Solar}$ basiert auf prognostizierter Solarstrahlungsberechnung (Einbeziehung Bewölkungsprognose Wetterdienst)
- $Q_{Heiz}$ basiert auf Wärmemengenzählung der Wärmepumpe
- Bestimmung der 3 Charaktersierungs-Größen des Gebäudes erfolgt nur für Tage / Zeiträume in denen gewisse Bedingungen eingehalten werden.
- Tägliche Abspeicherung der 3 Werte (dauerhaftes Lernen im Betrieb; Ändert sich das Gebäude oder Umgebungsbedingungen, sorgt Verfahren für die automatische Erkennung dieser Änderungen) und Median-Bildung für Endwerte

Es werden beispielsweise die Betriebsarten Automatik- bzw. Programmbetrieb und Warmwasserbetrieb unterstützt. Im Sommerbetrieb unterstützt das Energiemanagement beispielsweise den Warmwasserbetrieb und ermöglicht die Beschränkung des Kühlbetriebes auf Zeiten mit Fotovoltaik (FV)-Überschuss.

Die folgenden Betriebsparameter sind vorstellbar:
Ein Parameter FV-Deckungsanteil (bspw. 0 - 100%) legt fest, wie viel Strom, bezogen auf die minimale Leistungsaufnahme der Wärmepumpe, in das Netz eingespeist werden muss, damit auf die Energiemanagement Temperaturen umgeschaltet wird. Die Wärmepumpe wird dann in Abhängigkeit der Mindestkomfort- bzw. EM-Grenzen sowie des sinnvollen Leistungsbandes der Wärmepumpe so in der Leistung variiert, dass der Eigenverbrauch optimiert wird.

Steht mit hoher Wahrscheinlichkeit am Nachmittag ausreichend Ertrag zur Verfügung wird die Aufladung der thermischen Speicher durch den Wärmepumpen (WP)-Fahrplan verzögert. Ein Parameter "Wetterprognoseabhängigkeit" soll beispielsweise in vier Stufen "Stark", "Mittel", "Schwach" und "Aus" den Einfluss der Wetterprognose auf die Verzögerung der Wärmespeicherung steuern. Bei Aus soll die Nutzung des eingespeisten Stroms nicht in Abhängigkeit der Wettervorhersage verzögert werden.

Ein Parameter Wirkleistungsbegrenzung optimieren kann festlegen, ob die Wärmespeicherung erfolgen soll, sobald ein vorbestimmter Anteil der FV-Nennleistung überschritten wird, um eine FV-Abregelung zu verhindern.

Vorzugsweise stellt ein Funktionsmodul Prognosen für den Bewölkungsgrad und die Außentemperatur sowieso Längen- und Breitengrad basierend auf der Postleitzahl und dem Land zur Verfügung. Beispielsweise kann über einen Eingangswert Postleitzahl und einen Eingangswert Land, die von dem Nutzer beispielsweise in den Geräteeinstellungen bereitgestellt werden können, einen Ausgangswert Bewölkung, der einen prozentualen Bewölkungsgrad angibt, und/oder einen Ausgangswert Außentemperatur bereit. Der Ausgangswert Bewölkung kann den Bewölkungsgrad beispielsweise stündlich für den aktuellen Tag und den Folgetag angeben. In anderen Ausführungen können weitere Wetterdaten abgefragt werden.

Alternativ oder zusätzlich ist eine Positionsbestimmung über Eingangswerte Längengrad und Breitengrad möglich.

In einer Ausführung werden die Wetterdaten direkt von Q.met-Servern beispielsweise mittels eines http-Requests abgefragt. In anderen Ausführungen stellen andere Server die Daten bereit.

Kern der vorliegenden Offenbarung ist das thermische Modell zur thermischen Charakterisierung des Gebäudes. Das thermische Modell ist vorzugsweise in einem Software Funktionsmodul auf einer Verarbeitungseinheit wie einem Prozessor der Heizungsanlage, beispielsweise einer Wärmepumpe, hinterlegt und dort ausführbar.

Das thermische Modell stellt vorzugsweise einmal täglich drei thermische Kennzahlen des Gebäudes bereit. Den Wärmewiederstand $R_{Gebäudehülle}$ für den Wärmeübergang von innen nach Außen, den Einfluss der solaren Gewinne auf den Wärmebedarf $K_{Solar}$ und die Wärmespeicherkapazität des Gebäudes $C_{Gebäude}$.

Die folgenden Berechnungen werden vorzugsweise einmal am Tag, möglichst kurz vor Ende des Tages, für die (größtenteils vergangenen) 24 Stunden des betrachteten Tages berechnet werden, wenn möglich im 15-Minuten-Takt, sonst stündlich. Natürlich sind die Berechnungen auch mit anderen Taktungen und für andere Bezugszeiträume möglich.

Zur Verbesserung der Genauigkeit können nur Tage betrachtet werden, deren Daten vollständig seit 0 Uhr vorliegen. Insbesondere können halbe Tage nicht betrachtet werden.

Zur Berechnung werden daher über den Tag hinweg insbesondere Mittelwerte über die jeweiligen Zeitfenster (bspw. Stunde oder 15-Minuten) für folgende Werte vorgehalten werden:

- **ThetaDiff:** Differenz zwischen Raumisttemperaturen ($T_{Innen}$) bzw. alternativ die Raumsolltemperaturen und Außentemperatur ($T_{Außen}$)

- **Strahlung:** Beispielsweise Anhand des Sonnenstandes prognostizierte, maximale globale Horizontalstrahlung (E_Ghor)

- **QHeizung:** Heizleistung (berechnet bspw. über die Wärmemengenzählung)

Wenn die Berechnung beispielsweise um 23:45 Uhr durchgeführt wird, betrachtet man die Prognose für 0-24 Uhr des Tages, d.h. die Zeiträume, für die die Prognose erstellt wurde, sind fast komplett abgelaufen und liegen in der Vergangenheit.

**Mittlere Differenztemperatur über den ganzen Tag zwischen innen und außen berechnen (ThetaDiff):**

Bei vorhandenem Raumtemperaturfühler ist *ThetaInnen* eine Raumisttemperatur. Wenn mehrere Raumtemperaturfühler vorhanden sind, ist *ThetaInnen* entweder einer der mehreren vorhandenen Raumisttemperaturen oder ein Mittelwert daraus.

Sind keine Raumtemperaturfühler vorhanden, wird ein Raumsollwert als *ThetaInnen* herangezogen.

$$ThetaDiff = ThetaInnen - ThetaAussen\,[K]$$

Vorzugsweise wird ein Mittelwert über sämtliche in dem Bezugszeitraum erhaltenen Werte *ThetaDiff* bestimmt:

$$MeanThetaDiff_{Tag} = mean(ThetaDiff) \, [K]$$

Die Außentemperatur *ThetaAussen* kann entweder über einen Temperaturfühler gemessen oder über das beschriebene Funktionsmodul als Teil der abgefragten Wetterdaten erhalten werden.

**Mittlere, prognostizierte Strahlung über den ganzen Tag berechnen (Strahlung):**
Aus den 24 Stunden des zurückliegenden Tages kann zunächst die Strahlung um die Bewölkung bereinigt und danach der Mittelwert gebildet werden. Die Bestimmung der Strahlung erfolgt beispielsweise nach dem im weiteren Verlauf ausgeführten Verfahren, wobei dem Fachmann (m/w/d) auch andere Möglichkeiten bekannt sind.

$$Strahlung = Strahlung * Bew\"olkungskoeffizient \, [W/m^2]$$

$$MeanStrahlung_{Tag} = mean(Strahlung) \, [W/m^2]$$

**Mittleren Wärmeeintrag der Heizung über den ganzen Tag berechnen (QHeizung):**
Zur Berechnung der durchschnittlichen Heizwärmeleistung wird der Tagesstartwert der von der Wärmepumpe gelieferten Heizenergie vom Tagesendwert abgezogen und durch 24 Stunden geteilt. Damit wird eine durchschnittliche Heizwärmeleistung für den gesamten Tag erhalten.

In anderen Ausführungen können auch beispielsweise Heizwärmeleistungen QHeizung, jeweils bezogen auf bestimmte kürzere Zeiträume wie 15-Minuten oder Stunden, bereitgestellt werden, die dann unter Verwendung einer Mittelungsfunktion mean zu einem Mittelwert verarbeitet werden.

$$QHeizung_t = (WM \, Heizen \, Tag_{Endwert} - WM \, Heizen \, Tag_{Startwert}) \, / \, 24h \, [W]$$

$$MeanQHeizung_{Tag} = mean(QHeizung) \, [W]$$

Anschließend werden *MeanThetaDiff_{Tag}*, *MeanStrahlung_{Tag}*, und *MeanQHeizung_{Tag}* nun für die Berechnung des Wärmewiderstandes, des Solareintrages des Gebäudes und der Wärmekapazität des Gebäudes weiterverwendet.

**Berechnung Wärmewiderstand**

Der Wärmewiderstand *RGebaeudehuelle* ergibt sich aus der über einen Tag gemittelten Differenztemperatur zwischen innen und außen *MeanThetaDiff_{Tag}* und der über einen Tag gemittelten Wärmeabgabe des Gebäudes an die Umgebung *MeanQAbgabe_{Tag}*.

$$RGebaeudehuelle_{Tag} = \frac{MeanThetaDiff_{Tag}}{MeanQAbgabe_{Tag}} \, [\frac{K}{W}]$$

Die mittlere Wärmeabgabe des Gebäudes kann anhand des in Fig. 1 skizzierten thermischen Gebäudemodells über folgende Energiebilanz berechnet werden:

$$MeanQAbgabe_{Tag}$$
$$= MeanQHeizung_{Tag} + MeanQIntern_{Tag} + MeanQSolar_{Tag}$$
$$+ MeanQ_{\ddot{A}nd}Geb\"aude_{Tag} \, [W]$$

Die durchschnittlichen internen Wärmegewinne (Wärme aus Geräten und Menschen im Wohngebäude) ergeben sich vereinfacht angenommen aus der Multiplikation der beheizten Nutzfläche ($A_N$) mit einem Beiwert (Anlehnung an die DIN V4108-6 - Berechnung des Heizwärmebedarfs in Wohngebäuden nach EnEV). Da die DIN V4108 primär für Hochbauten gilt und diese Norm stetig weiter durch die neuere DIN V18599 ersetzt wird, welche in der Regel deutlich niedrigere interne Wärmegewinne berechnet, kann der Beiwert der DIN V4108 beispielsweise von 5 W/m$^2$ auf 2 W/m$^2$ oder auf einen anderen Wert reduziert werden.

$$MeanQIntern_{Tag} = 2\frac{W}{m^2} * A_N \, [W]$$

Solare Wärmegewinne werden über den Startwert (Literatur) oder falls vorhanden den bereits angelernten (mittleren) Solarnutzungsgrad ($KSolar_{Median}$) abgeschätzt:

$$MeanQSolar_{Tag} = KSolar_{Median} * MeanStrahlung_{Tag} \ [W]$$

Zuletzt wird die, durch die Temperaturänderung des Gebäudes hervorgerufene Energieaufnahme über den Startwert (später beschrieben) oder falls vorhanden die bereits angelernte (mittlere) Gebäudekapazität ($CGebäude_{Median}$) abgeschätzt:

$$MeanQ_{\text{Änd}}Gebäude_{Tag} = \frac{(Theta_{Innen,t} - Theta_{Innen,0})}{24 \ h} * CGebäude_{Median} \ [W]$$

**Filterung passender Tage:**

Für die Berechnung des thermischen Widerstands werden vorzugsweise nicht alle Tage verwendet, sondern lediglich solche, die folgende Bedingungen erfüllen:

- Differenztemperatur mindestens 10 *K: MeanThetaDiff$_{Tag}$* >= 10 K

- Heizung muss geheizt haben: *MeanQHeizung$_{Tag}$* > 0

Wenn der betrachtete Tag diese Bedingungen nicht erfüllt, wird kein Wärmewiderstand berechnet und mit der Bestimmung von *KSolar$_{Tag}$* fortgefahren.

Im Falle eines berechneten Wertes *RGebäudehülle$_{Tag}$* wird dieser wie die im Folgenden berechneten Werte *KSolar$_{Tag}$* und *CGebäude$_{Tag}$* gespeichert, beispielsweise persistent auf einer SD-Karte gespeichert. Für die Berechnung des Solareintrages ins Gebäude (*KSolar*) und die Bestimmung der thermischen Gebäudekapazität kann anschließend der Median oder eine andere Art von Mittelwert aller abgespeicherten *RGebaeudehuelle$_{TagX}$* gebildet werden.

$$RGebaeudehuelle_{Median} = Median(RGebaeudehuelle_{TagX}) \ \left[\frac{K}{W}\right]$$

**Solareintrag des Gebäudes**

Für die Bestimmung des Solarfaktors muss erneut eine Filterung vorgenommen werden. Es können Tage genutzt werden, die folgenden Bedingungen erfüllen. Werden diese Bedingungen nicht erfüllt, wird die Berechnung von K-Solar übersprungen und mit der Berechnung der Wärmekapazität fortgesetzt.

- Differenztemperatur mindestens 10 *K: MeanThetaDiff$_{Tag}$* >= 10 K

- Heizung muss geheizt haben: *MeanQHeizung$_{Tag}$* > 0

- Solarstrahlung vorhanden: *MeanStrahlung$_{Tag}$* > 50 W/m$^2$

Sobald der Tag die Bedingungen erfüllt, kann mit dem berechneten Wärmewiderstand nun jeweils für einen Tag die Wärmeabgabe über die Gebäudehülle angenähert werden:

$$MeanQAbgabe_{Tag} = \frac{MeanThetaDiff_{Tag}}{RGebaeudehuelle_{Median}} \ [W]$$

Hinweis: *MeanQAbgabe$_{Tag}$* entspricht vorzugsweise nicht der vorstehend berechneten Wärmeabgabe, da hier der angelernte (über alle Tage gemittelte) Wärmewiderstand verwendet wird. Über *MeanQAbgabe$_{Tag}$* und die thermische Energiebilanz des Gebäudes kann nun der Faktor für den Solareintrag *KSolar$_{Tag}$* bestimmt werden:

$$KSolar_{Tag}$$
$$= \frac{MeanQAbgabe_{Tag} - MeanQHeizung_{Tag} - MeanQIntern_{Tag} - MeanQ_{Änd}Gebäude_{Tag}}{MeanStrahlung_{Tag}} \; [m^2]$$

Ausgeschlossen werden negative Werte, falls $KSolar_{Tag}$ < 0 wird $KSolar_{Tag}$ = 0 gesetzt.

Dieser Wert wird wie $RGebaeudehuelle_{Tag}$ gespeichert, beispielsweise auf der SD-Karte persistent gespeichert.

Für die noch ausstehende Bestimmung der thermischen Gebäudekapazität kann anschließend der Median oder ein anderer Mittelwert aller abgespeicherten $KSolar_{TagX}$ gebildet werden.

$$KSolar_{Median} = Median(KSolar_{TagX}) \; [m^2]$$

**Startwert**

Je nach Gebäudetyp sind die solaren Einträge durch Wand und Dach mehr oder weniger vernachlässigbar im Vergleich zu den Süd-/Süddach-Fensterflächen. Die Fenster lassen ihrerseits ebenfalls nur ein Teil der Solarstrahlung durch (~50%). Wird eine durchschnittliche Südfensterfläche von 10 m$^2$ angenommen ergibt sich ein Startwert von

$$K_{Solar\_Startwert} = 5 \, m^2$$

Sobald eine gewisse Mindestzahl an gültigen Werten, beispielsweise mindestens 10 gültige Werte, für den berechneten Solareintrag vorliegen, wird anstelle des Startwertes der berechnete Median-Wert verwendet.

**Wärmekapazität**

Die Berechnung der Energiebilanz ist unterschiedlich für einen Pufferspeicher mit Mischer und für "normale" Heizkreise. Für den Pufferspeicher mit Mischer ergibt sich die Kapazität aus der spezifischen Kapazität von Wasser und dem vom Nutzer eingegebenen Volumen.

$$C_{Puffer} = V_{Puffer} * \frac{1160}{1000} [\frac{Wh}{K}]$$

Wenn kein Puffer mit Mischer vorhanden ist, ist dieser Wert natürlich 0. Die gesamte thermische Wärmekapazität ergibt sich aus der des Pufferspeichers und der des Gebäudes. Die Kapazität des Gebäudes kann aus dem Abkühlverhalten des Gebäudes nach einer Wärmespeicherung ermittelt werden.

Grundsätzlich könnte zur Bestimmung der Wärmekapazität jede beliebige Aufheiz- und/oder Abkühlphase herangezogen werden, jedoch sollte eine Abkühlphase derart gewählt sein, dass sie die besten Ergebnisse liefert (da dann z.B. keine Erwärmung durch solaren Eintrag vorliegen sollte). Es werden vorzugsweise nur Zeitfenster betrachtet, die zusätzlich folgende Bedingungen erfüllen:

- Differenztemperatur mindestens 10 *K: MeanThetaDiff*$_{Tag}$ >= 10 K

- Änderung der Gebäudeinnentemperatur mindestens > 0,7 K

Sobald das Signal zum Heizen des Gebäudes endet, muss die (bei mehreren Heizkreisen die durchschnittliche) Raumtemperatur beobachtet werden. Der Zeitpunkt, an dem die Temperatur anfängt zu sinken wird als Startpunkt der Abkühlphase abgespeichert. Der Zeitpunkt, an dem die Temperatur aufhört zu sinken, wird als Ende der Abkühlphase betrachtet, spätestens jedoch 12 Stunden nach Startzeitpunkt. Zieht sich ein Zeitfenster über den Tageswechsel hinaus, wird die komplette Abkühlphase dem Folgetag zugeordnet.

Da abgeschätzt werden kann, wie sehr die Sonne die Räume aufheizt, welche Wärme nach außen verloren geht und welche Wärme die WP eingebracht hat, kann anhand der Abkühlung und der Länge des Zeitraumes mit folgender Formel die Wärmekapazität abgeschätzt werden. Dabei ist T das Zeitfenster in h zwischen dem Endzeitpunkt t und dem Startzeitpunkt 0. $Q_{Heiz,T}$ beschreibt die Heizwärmeenergie, die die Wärmepumpe im Zeitraum T erzeugt hat.

$$CGeb\ddot{a}ude_T$$

$$= \frac{\left(\frac{MeanThetaDiff_T}{RGebaeudehuelle_{Median}} - MeanStrahlung_T * KSolar_{Median} - MeanQIntern_T\right) * T - Q_{Heiz,T}}{Theta_{Innen,t} - Theta_{Innen,0}} \left[\frac{Wh}{K}\right]$$

Zur Filterung von Kleinstschwankungen kann die Festlegung von Start- und Endpunkt in Ausführungsformen modifiziert werde.

Beispielsweise kann der Startpunkt bzw. Endpunkt festgelegt werden, wenn $|\Delta T_{innen}| > 0,3\,K$ innerhalb von 15min liegt. Alternativ kann eine mittlere Wärmeabgabeleistung (viertelstündlich) > 20 W/m$^2$ festgelegt werden.

Zur Filterung passender Zeitfenster kann umgesetzt werden, eine Mindeständerung der Gebäudeinnentemperatur in Abhängigkeit der eingestellten Solltemperaturen zu fordern.

Der Wert wird wie $RGebaeudehuelle_{Tag}$ und $KSolar_{Tag}$ gespeichert, beispielsweise auf der SD-Karte persistent gespeichert. Wenn an einem Tag mehrere solcher Phasen auftreten und mehrere Werte für CGebaeude$_T$ vorliegen wird vor dem Abspeichern der Mittelwert gebildet. Falls kein Raumtemperaturfühler vorliegt, wird die Speicherkapazität nicht wie oben beschrieben berechnet. Stattdessen wird der unten beschriebene Startwert angenommen.

Wenn mehrere aktive Heizkreise vorliegen und nicht alle mit Raumtemperaturfühlern ausgestattet sind, wird für die Heizkreise ohne Raumtemperaturfühler der Durchschnitt der Raumtemperaturen der Heizkreise mit Raumtemperaturfühlern als Ersatzwert für die Raumtemperatur verwendet.

In einem System ohne Puffer nähert der Median, alternativ natürlich auch ein anderer Mittelwert, aller abgespeicherten $CGeb\ddot{a}ude_{TagX}$ anschließend die thermische Gebäudekapazität für alle erfassten Tage.

$$CGeb\ddot{a}ude_{Median} = Median(CGeb\ddot{a}ude_{TagX}) \left[\frac{Wh}{K}\right]$$

In einem System mit Puffer näher der Median der kleinsten vorzugsweise 30% aller abgespeicherten $CGeb\ddot{a}ude_{TagX}$ anschließend die thermische Gebäudekapazität für alle erfassten Tage, wobei auch höhere oder niedrigere Schwellen vorstellbar sind.

Hier wird die Unterscheidung gemacht, da nächtliche Wärmeentnahme aus dem Pufferspeicher nicht in die Bilanz eingeht, aber die Abkühlung des Gebäudes reduziert und somit die berechnete Kapazität erhöht.

Bei allen Anlagen, egal ob mit oder ohne Raumtemperaturfühler, werden die Bauweise und die beheizte Wohnfläche ($A_{Heizflaeche}$) vom Nutzer abgefragt. Der gewählten Bauweise wird vorzugsweise Systemseitig, alternativ durch den Nutzer, eine Speicherkapazität im Bereich 30 Wh/m$^2$K (Leichtbau) bis 120 Wh/m$^2$K (Massivbau) zugeordnet.

$$C_{Geb\ddot{a}ude\,Startwert} = c_{Bauweise} * A_{Heizflaeche}$$

Bei Anlagen mit Raumtemperaturfühler werden diese Angaben nur genutzt, um einen Startwerte für die Gebäudekapazität zu bestimmen. Sobald mindestens 10 gültige Werte für die berechnete Kapazität vorliegen, wird anstelle der Startwerte der berechnete Wert verwendet. Bei Anlagen ohne Raumtemperaturfühler werden diese Startwerte dauerhaft verwendet.

### Prognose Fotovoltaik (FV)-Ertrag

Die folgenden Berechnungen werden jeweils für vorzugsweise 96 15-Minuten Zeitfenster der nächsten 24 Stunden durchgeführt. Die Berechnungen werden vorzugsweise stündlich durchgeführt, da die Wetterprognose stündlich aktualisiert wird.

Die Berechnungen sind insbesondere für den Betrieb von Fotovoltaik (FV)-Generatoren hilfreich, insbesondere im Zusammenhang mit Wärmepumpen, die die von dem FV-Generator erzeugte Energie zum Heizen des Gebäudes umweltfreundlich und nachhaltig einsetzen können.

Wenn mehr als ein FV-Generator konfiguriert ist, muss diese Berechnung für jeden Generator einzeln durchgeführt werden. Am Ende werden dann die prognostizierten FV-Leistungen addiert.

### Parameter J

$$J = 360 .* TagDesJahres./ZahlDerTageImJahr$$

**Bestrahlungsstärke**

$$Bestrahlungsstaerke = 1360 * (1 + 0.0334 * cosd(0.9855 * J - 2.7198))$$

**Deklination**

$$Deklination = (0.3948 - 23.2559 .* cosd(J+9.1) - 0.3915 .* cosd(2 .* J + 5.5) - 0.1764 .* cosd(3 .* J + 26))$$

**Zeitgleichung in Minuten**

$$Zgl = (0.0066 + 7.3525 .* cosd(J + 85.9) + 9.9359 .* cosd(2 .* J + 108.9) + 0.3387 .* cosd(3 .* J + 105.2))$$

**Mittlere Ortszeit**

$$MOZ = UTC\ Zeit + 4.*Laengengrad$$

**Wahre Ortszeit**

$$WOZ = MOZ + ZGL$$

**Stundenwinkel Omega**

$$Omega = (12 - WOZ./60) .* 15$$

**Elevation**

$$Elevation = asind(cosd(omega) .* cosd(Breitengrad) .* cosd(Deklination) + sind(Breitengrad) .* sind(Deklination))$$

Die Elevation darf nur Werte zwischen 0 und 90 ° einnehmen

**Sonnenazimut**

$$Sonnenazimut = (WOZ <= (12 * 60)) .* (180 - acosd((sind(Elevation) .* sind(Breitengrad) - sind(Deklination)).*/(cosd(Elevation) .* cosd(Breitengrad)))) + (WOZ > (12 * 60)) .* (180 + acosd((sind(Elevation) .* sind(Breitengrad) - sind(Deklination)).* / (cosd(Elevation) .* cosd(Breitengrad))))$$

Zunächst wird vorzugsweise die Absorption getrennt für verschiedene Elevationswertebereiche berechnet, um einen Parameter *FaktorAbsorption* zu erhalten. Dieser Parameter kann vorzugsweise systemseitig als Tabelle vorgegeben sein.

Analog erfolgt in einer Ausführung die Berechnung für die Rayleigh- und Mie-Streuung *FaktorRayleigh* und *FaktorMie* anhand einer systemseitig vorgegebenen Tabelle als Funktion der *Elevation.*

Mit diesen Faktoren kann die Globale Horizontalstrahlung berechnet werden:

*E_Ghor = Bestrahlungsstaerke .\* sind(Elevation) .\* FaktorAbsorption .\* Faktor- Rayleight .\* FaktorMie*

Numerisch mögliche, negative Werte werden durch 0 ersetzt, da es keine Werte kleiner Null geben darf.

Ebenso werden alle Werte für Elevationen < -5° (tritt auf im Dämmerungsbereich, wo es schon Strahlung gibt, obwohl die Sonne unter dem Horizont ist) auf Null gesetzt.

Die direkte Strahlung ist der Anteil der Globalstrahlung, der nicht diffus ist. Hierfür wird zunächst anhand bekannter Formeln der Anteil diffuser Strahlung ermittelt. Dieser wird dann von der globalen Horizontalstrahlung abgezogen, um die direkte Strahlung zu erhalten.

Ferner kann damit die direkte Strahlung auf die Anlage berechnet werden, die wiederum zur Berechnung der diffusen Strahlung auf die Anlage herangezogen wird.

Daraus kann die reflektierte Strahlung auf die FV-Anlage in Abhängigkeit der Neigung bestimmt werden.

Die ideale Strahlung ergibt sich aus der Summe der direkten, diffusen und reflektierten Strahlung auf die Anlage

Der Zusammenhang zwischen Bewölkungsgrad und FV-Ertrag kann durch eine quadratische Gleichung beschrieben werden

Die reale Strahlung auf die Anlage *RealeStrahlungAufAnlage* ist das Produkt aus idealer Strahlung *IdealestrahlungAnlage* und Bewölkungsgrad *Bewoelkungskoeffizient.*

Die FV-Modultemperatur hat einen Einfluss auf die Effizienz der FV Anlage, deshalb ist es vorteilhaft, diese anhand der Außentemperatur und der Solarstrahlung abzuschätzen.

Schließlich kann die prognostizierte FV-Leistung anhand der realen Strahlung auf die An- lage *RealeStrahlungAufAnlage*, der Spitzenleistung FVPeak und der abgeschätzten FV-

Modultemperatur berechnet werden. Wenn zwei Generatoren konfiguriert wurden, müssen die Leistungen entsprechend addiert werden.

Es liegen somit vorzugsweise 96 Werte, jeweils für 15 Minuten des Prognosezeitraums, für die prognostizierte FV-Leistung vor. Zusätzlich werden vorzugsweise jeweils alle berechneten Werte des Bewölkungskoeffizienten und der globalen Horizontalstrahlung des aktuellen Tages vorgehalten. Damit kann der Einfluss des Solarertrags im Rahmen der thermischen Charakterisierung bestimmt werden. Für die Lastprognose kann zudem der Wert für das jeweils vergangene Zeitfenster verwendet werden.

**Lastprognose**

Nun wird die Prognose des Haushaltsstromverbrauchs basierend auf historischen Messdaten beschrieben. Die Prognose erfolgt vorzugsweise jeweils getrennt für Montag bis Donnerstag, Freitag, Samstag und Sonntag. Die Aufnahme der Messdaten und die Erstellung der Prognose erfolgen vorzugsweise mit einer Auflösung von 15 Minuten. Pro Tag werden somit 96 Zeitfenster benötigt. Vorzugsweise werden für jedes neue 15-Minuten-Zeitfenster Messwerte beispielsweise der Zählerstände für Netzbezug und Netzeinspeisung abgespeichert.

Die prognostizierte FV-Leistung kann über die Zeit einfach zu einer prognostizierten FV-Energie, beispielsweise in Energie pro Stunde, umgerechnet werden.

Aus den Messwerten bzw. den Werten des Smart-Meters können die im gesamten Haus und die von der Wärmepumpe über ein Zeitfenster verbrauchte Strommengen berechnet werden.

Aus diesen Werten kann schließlich ein Haushaltsstromverbrauch berechnet werden, indem der WP-Verbrauch und der FV-Ertrag aus den Messwerten bzw. der Smart-Meter Messung rausgerechnet werden. Hierzu werden der Differenzwert des Smart-Meters und die Differenz der FV-Prognose addiert und hiervon der der Differenzwert des WP-Verbrauchs subtrahiert. Die FV-Prognose wird verwendet, wenn kein Zugriff auf FV-Erzeugungsdaten vorliegt. Werte unter einem Grundlastschwellwert, beispielsweise in nachfolgender Gleichung 50 W Grundlast (12,5 Wh/15 min), werden vorzugsweise ausgeschlossen.

$$E_t = \max\left(12{,}5\, , E_{SM,t} - E_{WP,t} + E_{PV,t}\right) \qquad [\text{Wh}]$$

mit

$$t = 0\ldots95$$

$E_t$:  Berechneter Haushaltsstromverbrauch

$E_{SM,t}$:   Smart Meter Differenz

$E_{WP,t}$:   Summe der Differenzen von Leistungsaufnahme für Heizen, WW und Kühlen (sobald im Regler umsetzt auch Kühlen)

$E_{FV,t}$:   FV-Ertragsdifferenz

Vorzugsweise werden die für den Haushaltsstromverbrauch berechneten werde für den Prognosezeitraum, bspw. einen Tag, vorgehalten.

**Aufstellen der Koeffizientenmatrix**

Vorzugsweise einmal am Tag werden die Prognosewerte der Matrix des betrachteten Wochentages aktualisiert und persistent auf dem ISG gespeichert.

Die Bestimmung der Verbrauchswerte ist besonders einfach möglich, wenn für jedes Zeitfenster alte, abgespeicherte Verbrauchswerte ($E_{t,alt}$) und neu berechnete Verbrauchswerte ($E_t$) über einen Gewichtungsfaktor a miteinander verrechnet werden.

$$E_{t,neu} = (1 - a) * E_t + a * E_{t,alt}$$

mit

$$t = 0\ldots95$$

$a$ = 0,5     (Gewichtung des alten Koeffizienten, auch andere Werte sind vorstellbar)

Beim ersten Erstellen der Koeffizienten, wenn also keine abgespeicherten Werte vorliegen, soll kein Mittelwert bzw. Gewichtung vorgenommen werden. Stattdessen wird der neu berechnete Leistungswert vorzugsweise direkt als erster Koeffizient abgespeichert. Dadurch müssen keine Startwerte abgespeichert werden und die Koeffizienten werden nicht aufgrund einer Mittelwertbildung mit 0 verzerrt. Sobald alle 96 Werte des aktuellen Wochentages aktualisiert wurden, wird die aktualisierte Matrix vorzugsweise persistent abgespeichert.

**Prognose**

Die Prognose des Haushaltsstromverbrauches wird im Voraus für den nächsten Prognosezeitraum, beispielsweise die nächsten 24 Stunden, bestimmt. Dies wird vorzugsweise alle 15-Minuten wiederholt. Hierzu müssen zunächst die Wochentage der nächsten 96 Zeitfenster bestimmt werden. Dazu werden die passenden Verbrauchswerte aus der Koeffizientenmatrix ausgewählt.

Ferner kann die erwartete durchschnittliche elektrische Energiebilanz am Netzanschlusspunkt für die nächsten 96 15-Minuten Zeitfenster berechnet werden.

Die elektrische Energiebilanz wird für den Prognosezeitraum, beispielsweise stündlich für die nächsten 96 15-Minuten Zeitfenster, berechnet.

Für jedes Zeitfenster t kann die Bilanz mit der prognostizierten Last des jeweiligen Wochentages gebildet werden

$$E_{Elec,t} = E_{FV,t} - E_{HH,t}$$

**Prognose thermische Energiebilanz**

In diesem Funktionsmodul wird vorzugsweise stündlich die erwartete durchschnittliche thermische Energiebilanz für die nächsten Zeitfenster, beispielsweise für die nächsten 96 15-Minuten Zeitfenster und damit die nachfolgenden 24 Stunden berechnet.

In einem ersten Schritt werden die Werte $RGebaeudehuelle_{Median}$ und $KSolar_{Median}$ aus den auf der SD-Karte gespeicherten Tageswerten berechnet.

Aus den Zeitprogrammen der Heizkreise (Zeitprogramme liegen beispielsweise im Viertelstundentakt vor) werde stündliche Raumsolltemperaturprofile berechnet, wobei auch natürlich andere zeitliche Auflösungen vorstellbar sind.

Wenn mehrere Heizkreise vorhanden sind, wird über alle vorhandenen Heizkreise ein gemitteltes Temperaturprofil gebildet.

Wenn an einem Heizkreis ein Pufferspeicher mit Mischer angeschlossen ist, wird dieser nicht in die Berechnung

einbezogen.

$$ThetaInnenSollHKx_{60min} = mean(ThetaInnenSollHKx_{15min}) \; [°C]$$

$$MeanThetaInnenSoll$$
$$= mean(ThetaInnenSollHK1_{60min}, ThetaInnenSollHK2_{60min}, \ldots) \; [°C]$$

Wenn die prognostizierte Außentemperatur in gleicher zeitlicher Auflösung vorliegt, beispielsweise in der oben genannten stündlichen Auflösung, kann auf eine Mittelwertbildung verzichtet werden, andernfalls wird eine Mittelwertbildung durchgeführt.

Der Energiebedarf wird wie ausgeführt beispielsweise für die nächsten 24 Stunden berechnet.

$$QBedarf_t = \frac{MeanThetaInnenSoll_t - ThetaAussen_t}{RGebaeudehuelle_{Median}} \; [W]$$

Dieser ermittelte Energiebedarf muss noch um solare und interne Wärmegewinne bereinigt werden, da diese nicht durch die Heizkreise zu erbringen sind. Für die Bestimmung des solaren Eintrags wird die mit der FV-Prognose ermittelte horizontale Globalstrahlung mit dem Bewölkungskoeffizienten und dem KSolar-Wert multipliziert. Die Berechnung erfolgt beispielsweise ebenfalls im Stundentakt.

$$Strahlung_t = E\_Ghor_t * Bewoelkungskoeffizient \; [W/m^2]$$

$$QSolar_t = KSolar_{Median} * Strahlung_t \; [W]$$

Interne Wärmegewinne können in einem einfachen Modell wie beschrieben als konstant angesehen werden und beispielsweise zwischen 5 W/m$^2$ und 2 W/m$^2$ betragen in Abhängigkeit der Gebäudeart.

Der resultierende Gesamtbedarf Qt wird dann, beispielsweise ebenfalls mit einer zeitlichen Auflösung von einer Stunde, bestimmt.

$$Q_t = QBedarf_t - QSolar_t - QIntern_t \; [W]$$

## Wärmespeicherpotential bestimmen

Das für die Wärmepumpe nutzbare Speicherpotential teilt sich auf die drei Komponenten Gebäude, Pufferspeicher und Warmwasser-Speicher (WW-Speicher) auf und ergibt sich aus der Temperaturdifferenz zwischen Ist- und vorgebbaren Energiemanagement-Temperaturen multipliziert mit den jeweiligen Wärmekapazitäten. Falls keine Ist-Temperatur zur Verfügung steht wird die aktuelle Solltemperatur verwendet. (Bei mehreren Innentemperatursensoren und mehreren Heizkreisen werden jeweils Mittelwerte fürs Gebäude gebildet).

Der Faktor $F_{Wetter}$ spielgelt die Wetterprognoseabhängigkeit wieder. Wird der Wert erhöht steigt die thermische Speicherkapazität und entsprechend früher würde das Scheduling im Tagesverlauf Energiemanagement-Signale generieren. Dies entspricht einer Reduzierung der Wetterprognoseabhängigkeit. Folgende Werte können zur Abbildung der Wetterprognoseabhängigkeit verwendet werden:

$$DeltaThetaHaus = ThetaHausEM - ThetaHausIst$$

$$DeltaThetaSpeicher = ThetaSpeicherEM - ThetaSpeicherIst$$

$$DeltaThetaWWSpeicher = ThetaWWSpeicherEM - ThetaWWSpeicherIst$$

$$SpeicherfaehigkeitHaus = DeltaThetaHaus * CGebaeude_{Median} * F_{Wetter}$$

$$SpeicherfaehigkeitPuffer = DeltaThetaSpeicher * CPufferSpeicher * F_{Wetter}$$

$$SpeicherfaehigkeitWWSpeicher = DeltaThetaWWSpeicher * CWWSpeicher * F_{Wet-}ter$$

In manchen Ausführungen, beispielsweise wenn das Scheduling startet und die Wärmepumpe gleichzeitig Warmwasser bereitet, wird bevorzugt, dass zur Abschätzung der *SpeicherfaehigkeitPuffer* (bzw. *DeltaThetaSpeicher*) nicht der Temperatur-Istwert sondern der Sollwert des Pufferspeichers (*mean*(*ThetaSpeicher$_{ZP}$*)) verwendet wird.

*CGebauede$_{Median}$*, *CPufferSpeicher* und *CWWSpeicher* entsprechen der im Rahmen der thermischen Charakterisierung berechneten Kapazitäten.

$$Speicherfaehigkeit = SpeicherfaehigkeitHaus + SpeicherfaehigkeitPuffer + Spei- cherfaehigkeitWWSpeicher$$

$$QPotenzialHeute = sum(QPotenzial(day(t) == day(datetime('today'))));$$

Wenn wesentlich mehr (Sicherheit beispielsweise 100% mehr) thermisches Potential für den aktuellen Tag prognostiziert wird als thermische Speicherfaehigkeit zur Verfügung steht, wird die Leistung des Verdichters vorzugsweise in Richtung des optimalen Betriebspunkt verschoben. Die Bestimmung von *QPotential* hat nach der Anpassung ein zweites Mal zu erfolgen.

Nun folgt eine Schleife über alle Zeitfenster, dabei wird von hinten nach vorne gezählt, d.h. t = 95...0 (bei einer Fenstergröße von 15 Minuten und 96 Zeitfenstern). Für jedes Zeitfenster wird ein Energiemanagement Signal, welches eine elektrische Solleistungsvorgabe beinhaltet, gesetzt. Somit kann abgeschätzt werden, ab welchem Zeitpunkt und mit welcher Leistung die Wärmepumpe eingeschaltet werden muss, um bis zum Zeitpunkt letzter Stromüberschüsse im Prognosefenster den freien Speicher (Gebäude und evtl. Pufferspeicher) auf die hochgesetzten Energiemanagement-Temperaturen aufzuheizen.

Da der Warmwasserverbrauch und somit auch dessen Nachheizbedarf schwer zu prognostizieren ist, wird zur Bestimmung des Signals ein vereinfachtes Verfahren verwendet. Basierend auf der berechneten Speicherfähigkeit des Warmwasser-Speichers und der thermischen Energie, die die Wärmepumpe in einem Zeitschritt in diesen einbringt, wird lediglich die Dauer bestimmt, die benötigt ist, um den Warmwasserspeicher auf die vorgegebenen Energiemanagement-Temperaturen zu heizen. Sobald in der von hinten gestarteten Schleife keine Energie mehr ins Gebäude und den Pufferspeicher eingebracht werden kann, wird für diese Dauer das Energiemanagement-Warmwasser Signal weiter gesetzt.

Als Ergebnis werden Fahrpläne für Wärmepumpen, die auf das Energiemanagement optimiert sind, erhalten. Diese sind beispielsweise bei konfigurierten Zeitprogrammen nachträglich und zusätzlich anzupassen.

Hierbei wird bestimmt, zu welchen Zeiten die Wärmepumpe betrieben wird, es wird also die geplante Laufzeit der Wärmepumpe bestimmt. Grundsätzlich erfolgt die Berechnung dieses Moduls regelmäßig, beispielsweise einmal pro Stunde, vorzugsweise für den gesamten betrachteten Zeitraum, d.h. den Prognosezeitraum.

Für die Berechnung werden minimale und maximale thermische und elektrische Leistung der Wärmepumpe benötigt:

*MAX_ELECTRICAL_POWER_INVERTER*

*MIN_ELECTRICAL_POWER_INVERTER*

*MAX_THERMAL_POWER_INVERTER*

*MIN_THERMAL_POWER_INVERTER*

Es gibt wenigstens 3 Möglichkeiten, wie diese Werte bestimmt werden, wobei der Fachmann (m/w/d) auch weitere Möglichkeiten selbstverständlich in Betracht zieht.

1. Die Werte werden beispielsweise vom Regler der Wärmepumpe dynamisch basierend auf den Umweltbedingungen bestimmt und von dort abgefragt. Die Werte sollen dann jeweils beispielsweise für jede Stunde des betrachteten Zeitraumes berechnet werden, in Abhängigkeit der prognostizierten Außentemperatur und der Vorlauftemperatur.

2. Die Werte sind konstant für einen Wärmepumpentyp und beispielsweise im Regler zur Abfrage hinterlegt.

3. Verwendung von EMI-Kennfeldern. Das passende Kennfeld kann beispielsweise ohne Eingabe von Kundendaten automatisch abgefragt werden.

Die Verwendung von EMI-Kennfeldern ist besonders in dem Fall vorteilhaft, in dem die Abfrage des Reglers schwierig oder nicht möglich ist.

Das EMI-Kennfeld enthält insbesondere explizit die oben angegebene minimale und maximale thermische und elektrische Leistung der Wärmepumpe. Vorzugsweise ist für jede im EMI-Kennfeld angegebene Verdichterdrehzahl i (zu der die Kennfeldparameter $F_{Source}$, $F_{Sink}$ und Const hinterlegt sind) passend zur Außentemperatur und zur Vorlauftemperatur der WP die thermische Leistungsabgabe, die elektrische Leistungsaufnahme und der COP der WP bestimmbar.

$$THERMAL\_POWER\_INVERTER\ (i)$$
$$= F_{Source_a}(i) * MeanThetaAussen + F_{Sink_a}(i) * ThetaVorlauf + Const_a(i)$$

$$ELECTRICAL\_POWER\_INVERTER\ (i)$$
$$= F_{Source_b}(i) * MeanThetaAussen + F_{Sink_b}(i) * ThetaVorlauf + Const_b(i)$$

$$COP\ (i) = F_{Source_c}(i) * MeanThetaAussen + F_{Sink_c}(i) * ThetaVorlauf + Const_c(i)$$

Vorzugsweise wird bei Luftwärmepumpen von dem Mittelwert aus den prognostizierten Außentemperaturen 0,5°C abgezogen, um die fürs Scheduling verwendete Quelltemperatur zu erhalten. Die 0,5°C werden angesetzt, um die Temperaturdifferenz zwischen Ta und Verdampfungstemperatur widerzuspiegeln.

$$MeanThetaAussen = mean(ThetaAussen) - 0{,}5$$

Bei Wärmepumpen mit Sole- oder Wasser als Quellmedium kann vereinfacht eine konstante Quelltemperatur von 5° angenommen werden, wobei auch eine jahreszeitliche Schwankung sinusförmig in Abhängigkeit vom aktuellen Tag (DOY, 01.01.XXXX: DOY = 1) angenähert werden kann.

$$MeanThetaAussen = 7 + 4 * \sin\left(2 * 3{,}1415926 * \frac{DOY - 137}{365}\right)$$

Die eingehende Vorlauftemperatur ergibt sich aus dem Mittelwert des jeweiligen Zeitprogrammes (ZP) und der Temperatur des EM-Betriebes.

Für den WW-Betrieb können direkt die hinterlegten Solltemperaturen (zuzüglich bspws. 3°C zur Abbildung des WT im Speicher) verwendet werden.

$$ThetaVorlauf = \frac{(mean(ThetaWWSpeicher_{ZP}) + ThetaWWSpeicherEM)}{2} + 3$$

Für den Heiz-Betrieb ist zu unterscheiden ob ein Pufferspeicher mit Mischer (in HK1) vorhanden ist oder nicht. Ist ein Pufferspeicher mit Mischer vorhanden errechnet sich die Vorlauftemperatur aus den hinterlegten Solltemperaturen für den Pufferspeicher gemäß:

$$ThetaVorlauf = \frac{(mean(ThetaSpeicher_{ZP}) + ThetaSpeicherEM)}{2}$$

Andernfalls muss mithilfe der hinterlegten Raumsolltemperaturen, der gemittelten Außentemperatur und den Heizkurveneinstellungen die Vorlauftemperatur bestimmt werden. Bei mehreren Heizkreisen und mehreren Innentemperatursensoren werden jeweils Mittelwerte für Temperaturen als auch Heizkurvenparameter des Gebäudes gebildet.

Die für die niedrigste Verdichterdrehzahl (i = 1) berechneten Werte thermische Leistungsabgabe, elektrische Leistungsaufnahme und COP erhalten im Folgenden den Index Min. Die für die höchste Verdichterdrehzahl (i = max) berechneten Werte für thermische Leistungsabgabe, elektrische Leistungsabgabe und COP erhalten im Folgenden den Index Max. Der Index Opt gibt die thermische Leistungsabgabe, die elektrische Leistungsabgabe oder den COP bei der Verdichterdrehzahl an, bei der der höchste COP ermittelt wird. Der Index Avg gibt einen Mittelwert über alle Drehzahlstufen für die thermische Leistungsabgabe, die elektrische Leistungsabgabe und den COP an.

Zudem wird zwischen dem Heizbetrieb (ThetaVorlauf für Betrieb auf Pufferspeicher oder Heizkreise) und dem Index WW-Betrieb (Theta Vorlauf für Beladung des Warmwasserspeichers) unterschieden.

**Wärmeüberschuss aus thermischer Energiebilanz bestimmen**

Die Berechnung wird angestellt, um die freie thermische Kapazität zum letzten Überschusszeitpunkt im Prognosezeitraum (bspw. am Tag) abschätzen zu können. Hierzu werden die in der thermischen Energiebilanz berechneten Werte verwendet. Ein negativer Wärmebedarf Q bedeutet, dass die Wärmegewinne größer sind als der Wärmeverlust des Gebäudes und somit Wärme in das Gebäude eingebracht wird.

*if t == 1*

    *if Q(1) < 0*

        *QUeberschuss(1) = abs(Q(1));*

    *else*

        *QUeberschuss(1) = 0;*

    *end*

*Else*

    *QUeberschuss(t) = QUeberschuss(t-1) - Q(t);*

    *if QUeberschuss(t) < 0*

        *QUeberschuss(t) = 0;*

    *end*

*End*

Somit liegt der thermische Überschuss für den gesamten betrachteten Zeitraum vor.

**Thermisches Potential bestimmen**

Für alle Zeitfenster t, in denen ein Stromüberschuss prognostiziert wird, der größer ist als die minimale Energiemenge, die die WP in dem Zeitfenster aufnehmen kann, wird die thermische Energiemenge QFV berechnet, die die WP mit dem Überschuss in diesem Zeitfenster erzeugen kann.

*If E(t) >= EWP_Min,Heiz(t) * FV-Deckungsanteil*

$$EPotential(t) = min\left(E(t), EWP_{Max,Heiz}(t)\right)$$

*Else*

$$EPotential(t) = 0$$

*End*

$$QPV(t) = EPotential(t) * COP_{Avg,Heiz}(t)$$

Von der speicherbaren thermischen Energie muss der vorhandene thermische Bedarf abgezogen werden, um zu bestimmen, wie viel Energie zusätzlich noch gespeichert werden kann.

**Wärmespeicherpotential bestimmen und Energiemanagement-Signal für Heizbetrieb setzen**

Das für die Wärmepumpe nutzbare Speicherpotential teilt sich auf die 3 Komponenten Gebäude, Pufferspeicher und WW-Speicher auf und ergibt sich aus der Temperaturdifferenz zwischen Ist- und EM-Temperaturen multipliziert mit den jeweiligen Wärmekapazitäten.

Falls keine Ist-Temperatur zur Verfügung steht wird die aktuelle Solltemperatur verwendet. (Bei mehreren Innentemperatursensoren und mehreren Heizkreisen werden jeweils Mittelwerte fürs Gebäude gebildet).

Der Faktor $F_{Wetter}$ spielgelt die Wetterprognoseabhängigkeit wieder. Wird der Wert erhöht steigt die thermische Speicherkapazität und entsprechend früher würde das Scheduling im Tagesverlauf Energiemanagement (EM)-Signale generieren. Dies entspricht einer Reduzierung der Wetterprognoseabhängigkeit. Folgende Werte können zur Abbildung der Wetterprognoseabhängigkeit verwendet werden:

| Wetterprognoseabhängigkeit | $F_{Wetter}$ |
|---|---|
| "stark" | 1 |
| "mittel" | 2 |
| "schwach" | 4 |
| "aus" | Kein Durchlaufen des Schedulings |

Wenn wesentlich mehr (Sicherheit = 2: 100% mehr) thermisches Potential für den aktuellen Tag prognostiziert wird als thermische Speicherfaehigkeit zur Verfügung steht, wird die Leistung des Verdichters in Richtung des optimalen Betriebspunkt EWP_Opt verschoben. Die Höhe der Sicherheit ist einstellbar, vorzugsweise zentral / werksseitig einsetzbar.

Wenn QPotenzialHeute größer als die mit der Sicherheit multiplizierte Speicherfähigkeit ist, können die relevanten Größen auf die jeweils optimalen Größen eingestellt werden:

$$EWP\_Heiz = EWP\_Opt, Heiz$$

$$EWP\_WW = EWP\_Opt, WW$$

$$COP\_WW = COP\_Opt, WW$$

Die Bestimmung von QPotential hat nun ein 2. Mal zu erfolgen mit der Anpassung, dass EPotential maximal den Wert EWP_Opt,Heiz (statt EWP_Max,Heiz) annehmen darf.

Ist QPotenzialHeute nicht größer als die mit der Sicherheit multiplizierte Speicherfähigkeit, werden die Werte auf die maximalen Größen eingestellt:

$$EWP\_Heiz = EWP\_Max, Heiz$$

$$EWP\_WW = EWP\_Max, WW$$

$$COP\_WW = COP\_Max, WW$$

Nun kann eine Schleife über alle Zeitfenster folgen, dabei wird von hinten nach vorne gezählt, d.h. t = 95...0 (bei einer Fenstergröße von 15 Minuten und 96 Zeitfenstern). Für jedes Zeitfenster wird vorzugsweise ein Signal, welches eine elektrische Solleistungsvorgabe beinhaltet, gesetzt. Somit kann abgeschätzt werden, ab welchem Zeitpunkt und mit welcher Leistung die WP eingeschaltet werden muss, um bis zum Zeitpunkt letzter Stromüberschüsse im Prognosefenster den freien Speicher (Gebäude und Pufferspeicher) auf die hochgesetzten EM-Temperaturen aufzuheizen.

Da der Warmwasserverbrauch und somit auch dessen Nachheizbedarf schwer zu prognostizieren ist, wird zur Bestimmung des Signals ein vereinfachtes Verfahren verwendet. Basierend auf der berechneten Speicherfähigkeit des WW-Speichers und der thermischen Energie, die die Wärmepumpe in einem Zeitschritt in diesen einbringt, wird vorzugsweise lediglich die Dauer bestimmt, um den Warmwasserspeicher auf die EM-Temperaturen zu heizen. Sobald in der von hinten gestarteten Schleife keine Energie mehr ins Gebäude und den Pufferspeicher eingebracht werden kann, wird für diese Dauer das EM_WW-Signal noch gesetzt.

Für jedes Zeitfenster kann beispielsweise mit der nachfolgenden Abfrage überprüft werden, ob es Potential gibt:
if (QPotential(t) > 0 && QPotentialAlt <= 0)

Beim ersten Auftreten von Potential wird der freie Speicher berechnet. Vom Speicher in der Gebäudemasse müssen die solaren Gewinne abgezogen werden, Speicher des Pufferspeichers bleiben davon unberührt. Wenn freier Speicher vorhanden ist, wird für dieses Zeitfenster das EM Trend Signal gesetzt.

Wenn weiterhin Potential vorhanden und freies Speicherpotential

Elseif (QPotenzial(t) > 0 && FreierSpeicher > 0)

$$FreierSpeicher = FreierSpeicher - QPotential(t)$$

$$EM_{Pmax}(t) = EWP_{Heiz} \qquad EM_{Pmin}(t) = EWP_{Min,Heiz}$$

$$EM_{Heiz}(t) = 1 \qquad EM_{WW}(t) = 0$$

Wenn kein freier Speicher mehr, aber WW-Bereitung noch möglich ist

Elseif (QPotenzial(t) > 0 && FreierSpeicher <= 0 && ZaehlerWW < DauerWW)

$$EM_{Pmax}(t) = EWP_{WW} \qquad EM_{Pmin}(t) = EWP_{Min,WW}$$

$$EM_{Heiz}(t) = 0 \qquad EM_{WW}(t) = 1$$

$$ZaehlerWW = ZaehlerWW + 1$$

Wenn aktuell kein Potenzial mehr vorhanden, im Zeitfenster davor aber schon, es also einen rechnerischen Überschuss, der aber nicht zusätzlich zum Heizen reicht. Falls besser: mitnehmen, falls schlechter: wenigstens noch die Mindestmenge nutzen:
Die erstellten WP-Fahrpläne sind bei konfigurierten Zeitprogrammen vorzugsweise anzupassen.

**Kurzfristige Steuerung/EM Handler**

In diesem Modul wird basierend auf der Auswertung des Leistungswertes des Zählers und des Schedules entschieden, ob aktuell das Energiemanagement, EM, die WP steuern soll oder nicht. Die folgenden Prüfungen bzw. Berechnungen sollen laufend in einem möglichst hohen Takt erfolgen (vorzugsweise mindestens minütlich).
Wenn ein Batteriespeicher vorhanden ist, tritt eine Besonderheit auf. In diesem Fall, soll nicht auf eine Netzleistung von +/- 0 geregelt werden, sondern auf eine Netzeinspeisung von 100 Watt. Dadurch soll verhindert werden, dass das EM denkt, es sei noch FV-Überschuss vorhanden, obwohl der Strom für die Wärmepumpe aktuell aus dem Batteriespeicher gespeist wird. Es wird vorzugsweise vom Nutzer konfiguriert, ob ein Batteriespeicher vorliegt oder nicht. In bevorzugten Ausführungen kann auch eine automatische Erkennung, ob ein Batteriespeicher vorliegt oder nicht, vorgenommen werden.

**Wirkleistungsbegrenzung**

Die Wirkleistungsbegrenzung wird in der kurzfristigen Steuerung berücksichtigt, um zu verhindern, dass Energie, die sonst nicht eingespeist werden könnte, ungenutzt bleibt. Sobald sich die gemessene Einspeisung der Wirkleistungsbegrenzung abzüglich eines Sicherheitsfaktors nähert, wird die Anforderung für das EM Trend Signal gesetzt. Hierzu wird der Mittelwert über das aktuelle Zeitfenster der gemessenen Zählerleistung verwendet.

If $P_{Mittel}$ > (Wirkleistungsgrenze - $P_{Puffer}$) * $P_{FVPeak}$:

Leistung = 1

Else

Leistung = 0

End

$P_{Puffer}$ kann, ohne darauf beschränkt zu sein, beispielsweise mit 5% angenommen werden.

In bevorzugten Ausführungen kann durch eine Einstellung entschieden werden, ob die Wirkleistungsbegrenzung umgesetzt wird oder nicht. Falls nein, wird die Leistung = 0 konstant angenommen.

**Überschussüberwachung**

Es wird überprüft, ob ausreichend eingespeiste Leistung am Zähler gemessen wird, um die Wärmepumpe einzuschalten. Zunächst muss festgelegt werden, wie viele der letzten Messwerte untersucht werden sollen bzw. welcher Zeitraum betrachtet werden soll. Es wird geprüft, ob der Überschuss größer ist als die minimale Leistungsaufnahme der Wärmepumpe. Wenn die Wärmepumpe aktuell im Betrieb ist, kann automatisch die überschüssige Leistung genutzt werden. Als Abschaltbedingung, die zum Abschalten des EM Trend-Signal führt, wird geprüft, wie oft Energiebezug statt einem Überschuss gemessen wird.

```
If Wp off:
    If P_Mittel(t…t-Hyst_on) >= P_Min_WP * FV-Deckungsanteil +100W
        Überschuss = 1
    Else
        Überschuss = 0
    End
End


If WP on:
    If P_Mittel(t…t-Hyst_off) < 0 +100W
        Überschuss = 0
    Else
        Überschuss = 1
    End
End
```

**Prognoseüberwachung**

Es wird überprüft, ob für das aktuelle (und angrenzende) Zeitfenster ein EM_Heiz oder EM_WW Signal vorliegt und entsprechend ein Parameter PrognoseJetzt = 1 oder = 0 gesetzt.

Zusätzlich wird geprüft, ob für den späteren Tagesverlauf Überschüsse prognostiziert wurden. Ist dies nicht der Fall (PrognoseHeute = 0), sollten die aktuellen Überschüsse genutzt werden.

Dazu wird geprüft, ob später am Tag mindestens eine vorbestimmte Anzahl an Zeitfenstern mit prognostiziertem EMTrendSignal auftreten. Die Anzahl der Zeitfenster kann beispielsweise 3 betragen, ohne darauf beschränkt zu sein.

**Signalbestimmung**

Für die finale Bestimmung des EM Trend-Signals werden die zuvor berechneten Anforderungen überlagert.

$$Signal = Leistung \mid Ueberschuss \;\&\; {\sim}PrognoseHeute \mid Ueberschuss \;\&\; PrognoseJetzt \mid Signal(t-1) \;\&\; Ueberschuss$$

Das Signal wird also gesetzt, wenn entweder:

- Die Wirkleistungsbegrenzung anliegt oder

- Aktuell ein Überschuss gemessen wird und für den restlichen Tag kein EM Trend-Signal prognostiziert wurde oder
- Aktuell ein Überschuss gemessen wird und für das aktuelle Zeitfenster ein EM Trend-Signal prognostiziert wurde oder
- Ein Signal bereits aktiv ist und kein Netzbezug Überschuss vorliegt.

Es wird also kein Signal gesetzt, wenn:

- Kein Überschuss vorliegt und auch kein Signal aktiv ist oder
- Ein Überschuss vorliegt, aktuell kein EM Trend-Signal aktiv ist, jedoch für den restlichen Tagesverlauf EM-Trend-Signale prognostiziert wurden

Der aktuelle Signalwert kann unter Einbeziehung der Aktivierung von EM Trend in die Statusmeldung fürs Energiemanagement "Status EM" einfließen, beispielsweise wie folgt:

- Status EM = 0: EM Trend deaktiviert
- Status EM = 1: EM Trend aktiviert & aktueller Signalwert = 0
- Status EM = 2: EM Trend aktiviert & aktueller Signalwert = 1

Wenn für den aktuellen Zeitpunkt das EM-Signal gesetzt ist, müssen schließlich noch die Temperaturen und die Solleistung gesetzt werden.

**Setzen der EM-Temperaturen**

Solange das EM-Signal gesetzt ist, werden die externen Raum-, Puffer- und Warmwassertemperaturvorgaben durch EM Trend gesteuert.

Ist nur das (im Scheduling ermittelte) Signal EM_Heiz gesetzt, so werden vorzugsweise nur die externen Raum- und Puffertemperaturen auf die konfigurierten Werte gesetzt und per Schalter-Attribut der Objekte zyklisch (bis auf weiteres minütlich) aktiviert.

Ist nur das (im Scheduling ermittelte) Signal EM_WW gesetzt, so wird vorzugsweise lediglich die externen Warmwassertemperatur auf den konfigurierten Wert gesetzt und per Schalter-Attribut des Objekts zyklisch (bis auf weiteres minütlich) aktiviert.

Wenn ein EM-Signal anliegt und EM_Heiz als auch EM_WW den gleichen Zustand aufweisen (beide aktiviert oder beide deaktiviert), werden vorzugsweise Raum-, Puffer- und Warmwassertemperaturvorgaben auf die konfigurierten Werte gesetzt und per Schalter-Attribut der Objekte zyklisch (bis auf weiteres minütlich) aktiviert.

Das zyklische Schreiben ist notwendig, wenn die Temperaturvorgabe vom Regler nach einer gewissen Zeit wieder zurückgesetzt werden, was beispielsweise nach Ablauf einer gewissen Zeitdauer, beispielsweise 5 Minuten, erfolgen kann. Sobald das EM-Signal nicht mehr gesetzt ist, wird die Temperaturvorgabe über das Schalter-Attribut deaktiviert.

**Setzen der WP-Leistung**

Solange das EM-Signal gesetzt ist, wird innerhalb der Leistungsgrenzen und unter Berücksichtigung der Mindeststillstand und der Mindestlaufzeiten die elektrische Aufnahmeleistung der WP gesteuert.

Solange der Mindeststillstand nicht abgelaufen ist, soll keine Sollleistung vorgeben werden. Liegt diese Information nicht vor, kann dieser Aspekt vernachlässigt werden, da der WP-Regler für die Überwachung zuständig ist.

Liegt kein EM Trend Signal mehr an und die Mindestlaufzeit ist noch nicht abgelaufen, wird keine Solleistung mehr vorgegeben, sodass die Leistung der Wärmepumpe vom Regler geregelt wird.

Wenn kein Batteriespeicher konfiguriert ist, ergibt sich die Sollleistung wie folgt:

$$P_{Soll} = CURRENT_{NET_{FEED}} + CURRENT_{ELECTRICAL_{POWER_{INVERTER}}} \qquad [W]$$

Wenn ein Batteriespeicher konfiguriert ist, ergibt sich die Solleistung wie folgt:

$$P_{Soll} = CURRENT_{NET_{FEED}} + CURRENT_{ELECTRICAL_{POWER_{INVERTER}}} - 100 \qquad [W]$$

Die Leistungsvorgabe soll bzw. darf in beiden Fällen nicht kleiner als die Leistung EM_Pmin und nicht größer als die Leistung EM_Pmax zum entsprechenden Zeitpunkt sein.

$$PRESET\_ELECTRICAL\_POWER = \min(\max(P_{Soll}, EM_{Pmin}), EM_{Pmax}) \qquad [W]$$

Wenn die WP zu dem aktuellen Zeitpunkt ausgeschaltet ist, gilt

$$CURRENT\_ELECTRICAL\_POWER\_INVERTER = 0.$$

**"EM Trend Light"**

"EM Trend Light" ist eine Fallback-Lösung, bei der die Steuerung der Wärmepumpe auf einer reinen Anschlussüberwachung basiert, d.h. sobald eine überschüssige Leistung am Netzanschlusspunkt erkannt ist, wird versucht, diese Leistung mit der Wärmepumpe thermisch zu speichern. Es werden somit nur die Module "Smart Meter Auswerten" und die Überschussüberwachung und das Schreiben von Leistungen und Temperaturen der "Kurzfristige[n] Steuerung" verwendet. Da keine Signale aus dem Scheduling für EM_Heiz oder EM_WW vorliegen wird entsprechend nicht nach Heiz- oder WW-Betrieb differenziert. Bei der Eingrenzung der externen elektrischen Leistungsvorgabe wird anstelle von EM_Pmin und EM_Pax der entsprechende absolute EMI-Grenzwert verwendet.

Die Voraussetzung für den EM Trend Light Betrieb ist eine funktionierende Verbindung zum EM-Meter und zum WP-Regler.

Dieser Betriebsmodus kann vorzugsweise in zwei Fällen verwendet werden.

1. Das EM-System kann nicht korrekt ausgeführt werden, insbesondere wenn kein Zugriff auf Wetterdaten möglich ist.

2. Der Parameter "Wetterprognoseabhängigkeit" ist auf 0 gesetzt. Hierdurch soll das EM befähigt werden, auch Systeme zu unterstützen, bei denen der Strom nicht durch eine FV-Anlage generiert wird, sondern beispielsweise durch eine Kleinwindkraftanlage oder ein BHKW.

**"Kühlen nur mit FV-Strom"**

Vorzugsweise ist die Möglichkeit vorgesehen, einzustellen, dass die Anlage nur kühlt, wenn ausreichend FV-Überschuss zur Verfügung steht. Wenn der Kunde den Parameter "Kühlen nur mit FV-Strom" aktiviert hat, kann die Erfindung dafür sorgen, dass die Kühlfunktion erst dann aktiviert wird, sobald ausreichender Überschuss am Netzanschlusspunkt vorhanden ist. Damit wird nur ökologisch erzeugter Strom für die Kühlung verwendet.

Die Kühlfunktion des Wärmepumpenreglers wird hierfür vorzugsweise über den Parameter "EXTERNAL_COOLING" freigegeben (= 1) und gesperrt (= 0) und per Schalter-Attribut des Objekts zyklisch (bis auf weiteres minütlich) aktiviert. Das zyklische Schreiben ist vorteilhaft, wenn die Wertevorgabe vom Regler nach einer gewissen Zeit wieder zurückgesetzt wird (bspw. nach 5 Minuten).

Es werden die gleiche Einschaltbedingung und die gleiche Hysterese verwendet, wie bei der kurzfristigen Steuerung. Es muss somit in dem Beispiel 5 Minuten lang ein Überschuss anliegen, der mindestens der minimalen Aufnahmeleistung entspricht. Sobald diese Bedingung erfüllt ist, wird das genannte Objekte freigegeben. Sobald diese Bedingungen nicht mehr erfüllt ist, wird die Kühlfunktion nach einer Hysterese analog zum normalen EM Trend Heizbetrieb wieder gesperrt.

Weiter wird ermöglicht, über Verbräuche im Haus, die Leistungsfähigkeit seiner Anlage und die Funktion des Energiemanagements informiert zu werden. Zu diesem Zweck wird eine Schnittstelle bereitgestellt, über die für den Nutzer Daten beispielsweise über eine WebGUI verfügbar sind:

• Status des Energiemanagements

• Wetterzustand (der nächsten 6 h als Icon)

• Aktuelle Netzbezugs- / Einspeiseleistung (Energiemanagements-Meter)

• Standby-Leistung des Gebäudes

• Prognostizierte Startuhrzeit für Speicherüberhitzung durch EM Trend

• Berechnete, durch Energiemanagement speicherbare Wärmemenge [beispielsweise auf 0,5 kWh gerundet]

**Patentansprüche**

1. Verfahren zur Temperaturprognose und/oder Wärmebedarfsprognose eines Gebäudes, umfassend

   - Bereitstellen einer gemessenen Innentemperatur in dem Gebäude,
   - Bereitstellen einer Außentemperatur in Umgebung des Gebäudes,
   - Bereitstellen einer in das Gebäude eingebrachten Wärmemenge,
   - Bereitstellen eines thermischen Modells des Gebäudes, wobei das thermische Modell die folgenden drei Modellparameter aufweist:

     a) einen Wärmewiderstand für einen Wärmeübergang von innerhalb des Gebäudes nach außerhalb des Gebäudes,
     b) einen Koeffizienten zur Beschreibung eines solaren Wärmeeintrags, und
     c) eine Wärmespeicherkapazität des Gebäudes,

     wobei das Verfahren einen Schritt des Anpassens der Modellparameter des thermischen Modells umfasst, derart, dass das thermische Modell den Zusammenhang zwischen Innentemperatur, Außentemperatur und Wärmemenge approximiert,
     wobei die Modellparameter regelmäßig, insbesondere täglich, besonders bevorzugt möglichst kurz vor Ablauf eines jeweiligen betrachteten Tages, angepasst werden,
     wobei die Modellparameter regelmäßig, insbesondere täglich, gespeichert werden und Endwerte der Modellparameter durch Mittelung, insbesondere Medianbildung, der gespeicherten Modellparameter erhalten werden,
     wobei die Anpassung der Modellparameter nur dann erfolgt, wenn der Betrachtungszeitraum wenigstens eine Vorbedingung erfüllt,
     wobei die Vorbedingung zur Bestimmung des thermischen Widerstandes aufweist:

     - Messdaten liegen vollständig für den Betrachtungszeitraum vor,
     - Differenztemperatur zwischen Innentemperatur und Außentemperatur mindestens 10 K, und/oder
     - Wärmemenge durch Heizung muss eingebracht worden sein.

2. Verfahren nach Anspruch 1, wobei das thermische Modell eine Energiebilanz des Gebäudes modelliert.

3. Verfahren nach einem der vorstehenden Ansprüche, das weiter die folgenden Schritte umfasst:

   - Bereitstellen einer Prognose der Außentemperatur und der Bewölkung für einen Prognosezeitraum, insbesondere Beziehen der Prognose der Außentemperatur und/oder der Bewölkung von einem Wetterdienst,
   - Ermitteln eines Temperaturverlaufs im Gebäude und/oder eines Wärmebedarfs des Gebäudes für den Prognosezeitraum anhand des thermischen Modells.

4. Verfahren nach Anspruch 3, wobei der Temperaturverlauf im Gebäude für den Prognosezeitraum unter der Annahme ermittelt wird, dass keine Heizenergie eingebracht wird.

5. Verfahren nach Anspruch 3 oder 4, wobei der Wärmebedarf des Gebäudes basierend auf einer bereitgestellten Solltemperatur im Gebäude ermittelt wird und einem Soll-Heizwärmeeintrag einer Heizungsanlage entspricht.

6. Verfahren zum Erstellen eines Wärmepumpenfahrplans zur Regelung einer Wärmepumpe, wobei das Verfahren den folgenden Schritt aufweist:

   - Erstellen des Wärmepumpenfahrplans basierend auf dem nach einem der Verfahren gemäß Anspruch 3 bis 5 ermittelten Wärmebedarf des Gebäudes.

7. Verfahren nach Anspruch 6, wobei die Wärmepumpe eine Fotovoltaikanlage umfasst, wobei die Erstellung des Wärmepumpenfahrplans unter Berücksichtigung der prognostizierten Bewölkung einen prognostizierten Überschuss der Fotovoltaikanlage heranzieht.

8. Verfahren nach Anspruch 7, wobei die Erstellung des Wärmepumpenfahrplans einen Betrieb der Wärmepumpe vorsieht, der eine Überhöhung der Temperaturen im Gebäude zu Zeiten des prognostizierten Überschusses der Fotovoltaikanlage beinhaltet.

**9.** Verfahren nach Anspruch 1, wobei für die Bestimmung des Koeffizienten zur Beschreibung eines solaren Wärmeeintrags die Vorbedingung weiter einen Mindestwert der mittleren Solarstrahlung enthält, vorzugsweise von mindestens 50 W/m$^2$.

**10.** Verfahren nach einem der vorstehenden Ansprüche, wobei jeweils ein mittlerer Wert der gemessenen Innentemperatur, der Außentemperatur und/oder der eingebrachten Wärmemenge bereitgestellt werden.

**11.** Verfahren nach Anspruch 10, wobei der Wert der gemessenen Innentemperatur durch Mittelung über alle Raum-Temperaturfühler des Gebäudes erhalten wird.

**12.** Verfahren nach Anspruch 10 oder 11, wobei innerhalb eines Betrachtungszeitraums mehrere Werte der Innentemperatur, der Außentemperatur und/oder der Wärmemenge gemessen werden, insbesondere je ein Wert je Stunde, besonders bevorzugt je ein Wert alle 15 Minuten, die für den Schritt des Anpassens der Modellparameter über den Betrachtungszeitraum gemittelt werden.

**13.** Verfahren nach einem der vorstehenden Ansprüche, wobei der Schritt des Anpassens der Modellparameter vollständig auf einer Recheneinheit einer Wärmepumpe innerhalb des Gebäudes ausgeführt wird.

**14.** Verfahren nach einem der vorstehenden Ansprüche, wobei die drei Modellparameter des thermischen Modells persistent auf einem persistenten Speichermedium, insbesondere einer SD-Karte, gespeichert werden.

**15.** Verfahren zum Betreiben einer Wärmepumpe, wobei ein Wärmepumpenfahrplan unter Berücksichtigung des Verfahrens nach einem der vorstehenden Ansprüche eingestellt wird.

**16.** Wärmepumpe mit einer Steuerung, wobei die Steuerung zur Durchführung eines Verfahrens nach einem der vorstehenden Ansprüche ausgebildet ist.

**Claims**

**1.** Method for temperature prediction and/or heat demand prediction of a building, comprising

- Provision of a measured indoor temperature in the building,
- Provision of an outdoor temperature in the vicinity of the building,
- Provision of a heat amount supplied to the building,
- Provision of a thermal model of the building, wherein the thermal model has the following three model parameters:

a) a thermal resistance for heat transfer from inside the building to outside the building,
b) a coefficient to describe a solar heat input, and
c) a heat storage capacity of the building,
wherein the method comprises a step of adjusting the model parameters of the thermal model such that the thermal model approximates the relationship between indoor temperature, outdoor temperature and heat amount,
wherein the model parameters are adjusted regularly, in particular daily, preferably as close as possible to the end of each day under consideration,
wherein the model parameters are stored regularly, in particular daily, and final values of the model parameters are obtained by averaging, in particular by median taking, of the stored model parameters,
wherein the model parameters are only adjusted if the observation period fulfils at least one precondition,
wherein the precondition for determining the thermal resistance comprises:

- Measurement data is available in full for the observation period,
- The differential temperature between indoor temperature and outdoor temperature is at least 10 K, and/or
- The heat amount must have been supplied by heating.

**2.** Method according to claim 1, wherein the thermal model models an energy balance of the building.

**3.** Method according to any one of the preceding claims, further comprising the following steps:

24

- Providing a prediction of the outdoor temperature and cloud cover for a prediction period, in particular obtaining the forecast of the outdoor temperature and/or cloud cover from a weather service,
- Determining a temperature curve in the building and/or a heat demand of the building for the prediction period using the thermal model.

4. Method according to claim 3, wherein the temperature curve in the building is determined for the prediction period on the assumption that no heating energy is supplied.

5. Method according to claim 3 or 4, wherein the heat demand of the building is determined based on a provided setpoint temperature in the building and corresponds to a setpoint heat input of a heating system.

6. Method for creating a heat pump schedule for controlling a heat pump, wherein the method comprises the following step:

- Creating the heat pump schedule based on the heat demand of the building determined according to one of the methods according to claims 3 to 5.

7. Method according to claim 6, wherein the heat pump comprises a photovoltaic system, wherein the creation of the heat pump schedule takes into account the predicted cloud cover and a predicted surplus of the photovoltaic system.

8. Method according to claim 7, wherein the creation of the heat pump schedule provides for an operation of the heat pump which includes an increase in the temperatures in the building at times of the predicted surplus of the photovoltaic system.

9. Method according to claim 1, wherein for the determination of the coefficient for describing a solar heat input, the precondition further contains a minimum value of the average solar radiation, preferably of at least 50 W/m$^2$.

10. Method according to any one of the preceding claims, wherein in each case an average value of the measured indoor temperature, the outdoor temperature and/or the heat amount supplied is provided.

11. Method according to claim 10, wherein the value of the measured indoor temperature is obtained by averaging across all room temperature sensors of the building.

12. Method according to claim 10 or 11, wherein a plurality of values of the indoor temperature, the outdoor temperature and/or the heat amount are measured within an observation period, in particular one value per hour, particularly preferably one value every 15 minutes, which are averaged over the observation period for the step of adjusting the model parameters.

13. Method according to any one of the preceding claims, wherein the step of adjusting the model parameters is carried out entirely on a computing unit of a heat pump within the building.

14. Method according to any one of the preceding claims, wherein the three model parameters of the thermal model are stored persistently on a persistent storage medium, in particular an SD card.

15. Method for operating a heat pump, wherein a heat pump schedule is set taking into account the method according to any one of the preceding claims.

16. Heat pump with a control unit, wherein the control unit is designed to carry out a method according to any one of the preceding claims.

**Revendications**

1. Procédé de prévision de la température et/ou du besoin en chaleur d'un bâtiment, comprenant les étapes consistant à

- fournir une température intérieure mesurée dans le bâtiment,
- fournir une température extérieure régnant à proximité du bâtiment,
- fournir une quantité de chaleur introduite dans le bâtiment,

- fournir un modèle thermique du bâtiment, le modèle thermique comportant les trois paramètres de modèle suivants :

a) une résistance thermique pour un transfert de chaleur de l'intérieur vers l'extérieur du bâtiment,
b) un coefficient descriptif d'un apport de chaleur solaire, et
c) une capacité de stockage thermique du bâtiment,
le procédé comprenant une étape consistant à adapter les paramètres du modèle thermique de telle sorte que le modèle thermique permet d'effectuer une approximation de la relation entre la température intérieure, la température extérieure et la quantité de chaleur, les paramètres de modèle étant adaptés régulièrement, en particulier quotidiennement, de manière particulièrement préférée aussi près que possible du terme d'une journée respective considérée,
les paramètres de modèle étant enregistrés régulièrement, en particulier quotidiennement, et les valeurs finales des paramètres de modèle étant obtenues par calcul de la moyenne, en particulier de la médiane, des paramètres de modèle enregistrés,
l'adaptation des paramètres de modèle n'étant effectuée que si la période considérée remplit au moins une condition préalable,
la condition préalable à la détermination de la résistance thermique comportant le fait que :

- les données de mesure sont disponibles dans leur intégralité pour la période considérée,
- la différence de température entre la température intérieure et la température extérieure est au moins égale à 10 K, et/ou
- la quantité de chaleur assurée par chauffage doit avoir été introduite.

2. Procédé selon la revendication 1, dans lequel le modèle thermique modélise un bilan énergétique du bâtiment.

3. Procédé selon l'une des revendications précédentes, comprenant en outre les étapes suivantes consistant à :

- fournir une prévision de la température extérieure et de la nébulosité pour une période de prévision, en particulier acquérir la prévision de la température extérieure et/ou de la nébulosité auprès d'un service météorologique,
- déterminer une courbe de température dans le bâtiment et/ou un besoin en chaleur du bâtiment pour la période de prévision à l'aide du modèle thermique.

4. Procédé selon la revendication 3, dans lequel la courbe de température dans le bâtiment pour la période de prévision est déterminée en supposant qu'aucune énergie de chauffage n'est introduite.

5. Procédé selon la revendication 3 ou 4, dans lequel le besoin en chaleur du bâtiment est déterminé en fonction d'une température de consigne dans le bâtiment fournie et correspond à un apport de chaleur de chauffage de consigne d'une installation de chauffage.

6. Procédé d'établissement d'un programme horaire de pompe à chaleur pour la régulation d'une pompe à chaleur, le procédé comportant l'étape suivante consistant à :

- établir le programme horaire de pompe à chaleur en fonction du besoin en chaleur du bâtiment déterminé d'après l'un des procédés selon les revendications 3 à 5.

7. Procédé selon la revendication 6, dans lequel la pompe à chaleur comprend une installation photovoltaïque, l'établissement du programme horaire de pompe à chaleur prenant en compte un excédent prévu de l'installation photovoltaïque compte tenu de la nébulosité prévue.

8. Procédé selon la revendication 7, dans lequel l'établissement du programme horaire de pompe à chaleur prévoit un fonctionnement de la pompe à chaleur impliquant une surélévation des températures dans le bâtiment aux moments de l'excédent prévu de l'installation photovoltaïque.

9. Procédé selon la revendication 1, dans lequel, pour la détermination du coefficient descriptif d'un apport de chaleur solaire, la condition préalable comporte en outre une valeur minimale du rayonnement solaire moyen, de préférence d'au moins 50 W/m$^2$.

**10.** Procédé selon l'une des revendications précédentes, dans lequel on fournit respectivement une valeur moyenne de la température intérieure mesurée, de la température extérieure et/ou de la quantité de chaleur introduite.

**11.** Procédé selon la revendication 10, dans lequel la valeur de la température intérieure mesurée est obtenue par calcul de la moyenne de tous les capteurs de température ambiante du bâtiment.

**12.** Procédé selon la revendication 10 ou 11, dans lequel, au cours d'une période considérée, plusieurs valeurs de la température intérieure, de la température extérieure et/ou de la quantité de chaleur sont mesurées, en particulier une valeur respective par heure, de manière particulièrement préférée une valeur respective toutes les 15 minutes, dont la moyenne est calculée sur la période considérée pour l'étape d'adaptation des paramètres de modèle.

**13.** Procédé selon l'une des revendications précédentes, dans lequel l'étape d'adaptation des paramètres de modèle est exécutée entièrement sur une unité de calcul d'une pompe à chaleur à l'intérieur du bâtiment.

**14.** Procédé selon l'une des revendications précédentes, dans lequel les trois paramètres du modèle thermique sont enregistrés de manière non volatile sur un support de stockage non volatil, en particulier une carte SD.

**15.** Procédé de fonctionnement d'une pompe à chaleur, dans lequel un programme horaire de pompe à chaleur est réglé en tenant compte du procédé selon l'une des revendications précédentes.

**16.** Pompe à chaleur comportant un dispositif de commande, le dispositif de commande étant conçu pour exécuter un procédé selon l'une des revendications précédentes.

Fig. 1

Fig. 2

**IN DER BESCHREIBUNG AUFGEFÜHRTE DOKUMENTE**

**In der Beschreibung aufgeführte Patentdokumente**

- DE 102020132200 A1
- WO 20111007736 A2
- US 10025331 B
- US 2015006125 A1
- US 2017206615 A1
- US 2015134124 A1
- DE 102017125282 A1